(19) Europäisches Patentamt
European Patent Office
Office européen des brevets

(11) **EP 2 642 167 B1**

(12) **EUROPÄISCHE PATENTSCHRIFT**

(45) Veröffentlichungstag und Bekanntmachung des Hinweises auf die Patenterteilung:
**06.05.2015   Patentblatt 2015/19**

(51) Int Cl.:
*F16K 1/22* *(2006.01)*          *F16K 1/226* *(2006.01)*
*A62C 2/12* *(2006.01)*

(21) Anmeldenummer: **13001138.0**

(22) Anmeldetag: **07.03.2013**

(54) **Absperrvorrichtung zum Verschließen eines Strömungskanals**

Shut-off device for closing a flow channel

Dispositif de fermeture pour fermer un canal d'écoulement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2012   AT 3172012**

(43) Veröffentlichungstag der Anmeldung:
**25.09.2013   Patentblatt 2013/39**

(73) Patentinhaber: **Geldner, Siegfried**
**6112 Maurach, Tirol (AT)**

(72) Erfinder: **Geldner, Siegfried**
**6112 Maurach, Tirol (AT)**

(74) Vertreter: **Flach, Dieter Rolf Paul et al**
**Andrae I Westendorp**
**Patentanwälte Partnerschaft**
**Adlzreiterstrasse 11**
**83022 Rosenheim (DE)**

(56) Entgegenhaltungen:
**EP-A2- 0 512 414          WO-A1-2010/069780**
**DE-U1- 9 003 159          DE-U1-202008 014 234**
**US-A1- 2004 129 248**

EP 2 642 167 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine Absperrvorrichtung zum Verschließen eines Strömungskanals nach dem Oberbegriff des Anspruches 1.

Absperrvorrichtungen zum Verschließen eines Strömungskanals werden auch als Brandschutzklappen bezeichnet. Brandschutzklappen werden beispielsweise in Lüftungskanälen und Abzugskanälen eingesetzt, die Strömungskanäle darstellen und einzelne Räume oder Gebäudeabschnitte miteinander und/oder beispielsweise auch mit einer Belüftungs- oder einer Klimaanlage verbinden.

Im Normalbetrieb soll Luft, oder ganz allgemein ein gasförmiges Medium durch eine in einem Strömungskanal eingesetzte oder eingebaute Brandschutzklappe in seiner Strömung zwischen zwei Räumen oder Gebäudeabschnitten möglichst wenig behindert werden. Im Falle eines Brandes oder einer Rauchentwicklung in einem Raum oder in einem Gebäudeabschnitt soll eine Brandschutzklappe jedoch einen Austausch von Luft oder gasförmigen Medien zwischen den durch den Strömungskanal miteinander verbundenen Räumen unterbinden, so dass sich Hitze und/oder Rauch nicht von einem Raum zu einem über den Strömungskanal mit diesem verbundenen Raum ausweiten bzw. ausbreiten kann.

Eine Brandschutzklappe umfasst üblicherweise ein Klappengehäuse mit einem Klappengehäusekanal und eine in diesem um eine Schwenkachse schwenkbar gelagerte Absperrklappe. Die Absperrklappe ist zwischen einer Offenstellung, in der die Brandschutzklappe strömungsdurchlässig ist, und einer Schließstellung schwenkbar, in der die Brandschutzklappe strömungsundurchlässig ist. Zur Verbesserung der Dichtwirkung in Schließstellung ist auf dem Umfang der Absperrklappe üblicherweise eine Dichtung angeordnet, mittels der ein notwendiger Spalt zwischen dem Umfang der Absperrklappe und der Innenwandung des Klappengehäuses in Schließstellung der Absperrklappe abgedichtet werden soll. Auf der Innenwandung des Klappengehäuses kann zusätzlich ein flexibles Band aus intumeszierendem Material angebracht sein, das beispielsweise Blähgrafitbasis umfasst, und das unter Temperatureinwirkung mit hohem Druck aufschäumt und im Brandfall einen druckfesten Schaum bildet.

Bei eckigen Brandschutzklappen mit eckigen Klappengehäusekanälen und entsprechend geformten eckigen Absperrklappen sind die Eckbereiche der Klappengehäusekanäle mittels Dichtungen nur sehr schwer und mit unbefriedigender Dichtigkeit abzudichten. Weiterhin weisen entsprechend geometrisch geformte, üblicherweise rechteckige Brandschutzklappen den Nachteil auf, dass bei einer gewissen Winkel-Stellung der Absperrklappe in dem Klappengehäusekanal kurz vor der Schließstellung der Absperrklappe die umlaufend angeordnete Dichtung über ihre gesamten zwei gegenüberliegenden Quereerstreckungen gleichzeitig mit der Innenwand des Klappengehäuses in Kontakt kommen, da die entsprechenden Querseiten der Absperrklappe geradlinig (nicht gekrümmt) sind.

Dies hat zur Folge, dass ab der Winkelstellung der Absperrklappe, bei der die Dichtung mit der Innenwand des Klappengehäusekanals Kontakt hat, zur weiteren Verschwenkung der Absperrklappe in Richtung Schließstellung ein sehr großes Drehmoment aufgebracht werden muss, da die Dichtung über ihre gesamte Quererstreckung zum einen verformt (zusammengedrückt) werden muss, und zum anderen muss die Haftreibung zwischen der Dichtung und der Innenwand des Klappengehäusekanals überwunden werden, wobei die Haftreibung mit der Anlagefläche zwischen der Dichtung und der Innenwand des Klappengehäusekanals steigt. Andererseits muss zur Überführung der Absperrklappe von der Schließstellung in die Offenstellung aus den gleichen Gründen ein sehr großes Drehmoment aufgebracht werden. Daher muss bei einer entsprechenden geometrischen Ausgestaltung der Brandschutzklappe für eine motorische Verschwenkung der Absperrklappe ein überdimensionierter Antriebsmotor verwendet werden.

Zur Reduzierung des für die Schließung bzw. für die Öffnung einer Brandschutzklappe notwendigen Drehmoments ist es gemäß dem Stand der Technik bekannt, Brandschutzklappen mit einer kreisrunden Querschnittsgeometrie zu verwenden. Dabei weisen sowohl der Klappengehäusekanal als auch die Absperrklappe jeweils eine kreisrunde Querschnittsform auf. Daher kommt die auf dem Umfang der Absperrklappe angeordnete Dichtung bei einer vorgegebenen Winkelstellung (in der Nähe / dem Bereich der Schließstellung) mit dem Klappengehäusekanal lediglich an zwei gegenüberliegenden Punkten in Kontakt. Bei einer weiteren Verschwenkung der Absperrklappe in Richtung der Schließstellung kommen dann sukzessiv weitere teilkreisförmige bzw. bogenförmige Dichtungsabschnitte mit dem Klappengehäusekanal in Kontakt, so dass das zur Schließung der Absperrklappe notwendige Drehmoment langsam und stetig anwächst, wobei das erforderliche Drehmoment zur Überwindung der Haftreibung konstant ist und proportional zur Kontaktfläche stetig anwächst und bei Annäherung an die schließstellung seinen höchsten Wert erreicht, wohingegen das Drehmoment zur Überwindung der Verformung der Dichtlippe variabel ist und lediglich abschnittsweise beim Einschwenken der Absperrklappe wirkt und nicht additiv ist.

Da das Verhältnis des Umfanges zur von dem Umfang umschlossenen Fläche bei einem Kreis günstiger (kleiner) als bei einem Rechteck oder einem Quadrat ist, ist das aufzubringende Drehmoment zum Schließen bzw. Öffnen der Absperrklappe mit einer kreisrunden Querschnittsgeometrie kleiner. Aufgrund einer entsprechenden geometrischen Ausgestaltung der Brandschutzklappe kann ein Antriebsmotor im Vergleich zu einer Brandschutzklappe mit einer rechteckförmigen Querschnittsgeometrie verkleinert werden.

Bei einem Einbau einer Brandschutzklappe mit kreisrundem Querschnitt in einen Strömungskanal mit rechteckigem oder quadratischem Querschnitt weist die Brandschutzklappe jedoch den Nachteil auf, dass die Querschnittsfläche des Klappengehäusekanals wesentlich kleiner ist als die Querschnittsfläche des Strömungskanals. Dies wiederum hat Verwirbelungen der in dem Strömungskanal transportierten Luft im geöffneten Zustand der Brandschutzklappe zur Folge, wodurch zum einen ein nicht erwünschtes Strömungsgeräusch erzeugt als auch die mögliche Durchsatzmenge des Belüftungssystems reduziert wird.

EP 1 302 220 A1 offenbart eine Brandschutzklappe mit rechteckigem Querschnitt. In den vier Eckbereichen des rechteckförmigen Klappengehäusekanals sind vier Formteile derart angeordnet, dass der Klappengehäusekanal im Bereich der Absperrklappe eine Querschnittsform aufweist, die einem Rechteck mit zwei angeschlossenen Halbkreisen gleicht. Die Absperrklappe weist eine entsprechende Querschnittsform auf, so dass der Klappengehäusekanal mittels der Absperrklappe verschließbar ist. Mittels einer entsprechenden Brandschutzklappe wird die oben beschriebene Problematik der Abdichtung der Eckbereiche des Klappengehäusekanals gelöst. Weiterhin ist die Querschnittsfläche der Absperrklappe größer als die Querschnittsfläche einer in den Strömungskanal passenden kreisrunden Absperrklappe. Jedoch weist sowohl der Klappengehäusekanal als auch die Absperrklappe jeweils zwei gegenüberliegende geradlinige Quererstreckungen auf, so dass die oben beschriebene Problematik des für die Überführung der Absperrklappe von der Offenstellung in die Schließstellung und umgekehrt hohen notwendigen Drehmoments weiterhin besteht.

Die DE 20 2008 014 234 U1 offenbart eine Brandschutz-/Entrauchungseinrichung. Die Brandschutz-/Entrauchungseinrichtung umfasst ein Gehäuse, das einen Gehäusekanal aufweist. Eine Schließklappe ist in dem Gehäusekanal um eine mittig angeordnete Schwenkachse schwenkbar gelagert. Längs des Umfangs der Schließklappe ist eine zweite Dichtung angeordnet, die in Schließstellung der Schließklappe mit der Innenwand des Gehäuses in Kontakt bringbar ist. In dem Gehäusekanal des Gehäuses sind zumindest zwei Anschläge vorgesehen, in denen jeweils eine erste Dichtung angeordnet ist. In Schließstellung in der Schließklappe sind die Randbereiche der Schließklappe mit den jeweiligen ersten Dichtungen in Kontakt bringbar. Sowohl das Gehäuse als auch die Schließklappe können elliptische Querschnitte aufweisen.

Die DE 44 09 088 A1 offenbart eine Absperrvorrichtung gegen Brandübertragung in Lüftungsleitungen. Die Absperrvorrichtung umfasst einen Rahmen mit Rahmenteilen. Zwischen den Rahmenteilen ist ein um eine Drehachse drehbar gelagertes Klappenblatt angeordnet. Das Klappenblatt ist zwischen einer Offenstellung, in der der Rahmen strömungsdurchlässig ist, und einer Schließstellung, in der der Rahmen nicht strömungsdurchlässig ist, verschwenkbar. Sowohl der Rahmen als auch das Klappenblatt können ellipsenförmig ausgestaltet sein. Zur Erhöhung der Abdichtwirkung der Absperrvorrichtung verlaufen Flächen, die von Spalten zwischen einander zugekehrten Rändern am Klappenblatt 6 und den Rahmenseitenteilen definiert sind, und die in Schließstellung des Klappenblattes aneinander geschmiegt sind, in einem Winkel $\alpha$ zur Klappenblattebene.

Aufgabe der vorliegenden Erfindung ist die Bereitstellung einer verbesserten Brandschutzklappe, die in Schließstellung der Absperrklappe den Klappengehäusekanal zuverlässig abdichtet, bei der zur Überführung der Absperrklappe von der Offenstellung in die Schließstellung und umgekehrt lediglich ein niedriges Drehmoment notwendig ist und die in Offenstellung einen möglichst niedrigen Strömungswiderstand aufweist.

Die Aufgabe wird durch eine Absperrvorrichtung zum Verschließen eines Strömungskanals für Luft und/oder gasförmige Medien mit den in Anspruch 1 angegebenen Merkmalen gelöst. Vorteilhafte Ausgestaltungen der Erfindung sind in den Unteransprüchen angegeben.

Im Genaueren umfasst die Absperrvorrichtung zum Verschließen eines Strömungskanals für luft- und/oder gasförmigen Medien, oder kurz die Brandschutzklappe ein Klappengehäuse mit einer Absperrklappe. Das Klappengehäuse weist dabei einen Klappengehäusekanal auf. Die Absperrklappe ist in dem Klappengehäusekanal auf einer Schwenkachse schwenkbar gelagert. Längs eines Umfangs der Absperrklappe ist eine Dichtung angeordnet, und die Absperrklappe ist zwischen einer Offenstellung und einer Schließstellung schwenkbar. Dabei ist in Offenstellung der Absperrklappe der Klappengehäusekanal strömungsdurchlässig, wohingegen in Schließstellung der Absperrklappe diese den Klappengehäusekanal verschließt, so dass der Klappengehäusekanal strömungsundurchlässig ist. Erfindungsgemäß weist die Absperrklappe einen superelliptische Querschnitt auf, der im kartesischen Koordinatensystem der Ellipsengleichung

$$\left|\frac{x}{a}\right|^{n} + \left|\frac{y}{b}\right|^{n} = 1$$

entspricht, wobei a und b die Halbachsen der Ellipse, x die X-Koordinate, y die Y-Koordinate und n eine reele Zahl im Bereich $10 \geq n > 2$ sind.

Die erfindungsgemäße Absperrvorrichtung zum Verschließen eines Strömungskanals für luft- und/oder gasförmige Medien, oder kurz die erfindungsgemäße Brandschutzklappe, erreicht unter Beibehaltung der Vorteile der Brandschutzklappe gemäß der EP 1 302 220 A1 eine Reduzierung des notwendigen Drehmoments für die Überführung der Absperrklappe von der Offenstellung in die Schließstellung und umgekehrt, wobei gleichzeitig die Querschnittsfläche des Klappengehäusekanals im Vergleich zu einer Brandschutzklappe mit kreisrundem Querschnitt vergrößert ist, so dass die erfindungsgemäße Brandschutzklappe in Offenstellung einen geringeren Strömungswiderstand aufweist.

Da sowohl der Klappengehäusekanal als auch die Absperrklappe jeweils superelliptische Querschnitte aufweisen, kommt die auf dem Umfang der Absperrklappe angeordnete Dichtung bei einer vorgegebenen Winkelstellung der Absperrklappe (in der Nähe / dem Bereich der Schließstellung) mit dem Klappengehäusekanal lediglich an zwei gegenüberliegenden Punkten in Kontakt. Bei einer weiteren Verschwenkung der Absperrklappe in Richtung der Schließstellung kommen dann sukzessive weitere bogenförmige Dichtungsabschnitte mit dem Klappengehäusekanal in Kontakt, so dass das zur Schließung der Absperrklappe notwendige Drehmoment langsam und stetig anwächst, wobei das erforderliche Drehmoment zur Überwindung der Haftreibung konstant ist und proportional zur Kontaktfläche stetig anwächst und bei Annäherung an die schließstellung seinen höchsten Wert erreicht, wohingegen das Drehmoment zur Überwindung der Verformung der Dichtlippe variabel ist und lediglich abschnittsweise beim Einschwenken der Absperrklappe wirkt und nicht additiv ist.

Weiterhin ist das Verhältnis des Umfangs zur von dem Umfang umschlossenen Fläche bei einer Superellipse günstiger (kleiner) als bei einem Rechteck oder Quadrat, so dass das Aufzubringende Drehmoment zum Schließen bzw. Öffnen der Absperrklappe mit einer superelliptischen Querschnittsgeometrie aufgrund des kleineren Umfangs kleiner ist als bei einer Absperrklappe mit einer rechteckförmigen Querschnittsgeometrie. Daher kann bei einer entsprechenden superelliptischen Ausgestaltung der Brandschutzklappe ein Antriebsmotor zum Verstellen der Absperrklappe kleiner ausfallen als bei einer Brandschutzklappe mit einer rechteckförmigen Absperrklappe.

Weiterhin weist eine Absperrklappe mit einer superelliptischen Querschnittsgeometrie eine große Fläche auf, so dass bei einem Einbau der erfindungsgemäßen Brandschutzklappe in einen rechteckförmigen oder quadratischen Strömungskanal lediglich eine kleine Verengung durch die Brandschutzklappe vorliegt, so dass lediglich kleine Verwirbelungen der Strömungsluft bewirkt werden, so dass die durch Turbulenzen bedingte Geräuschentwicklung durch die erfindungsgemäße Brandschutzklappe vermindert ist.

Bei dem Strömungskanal kann es sich dabei um einen Lüftungs- und/oder Abzugskanal, einem Förderkanal oder schlicht um eine Maueröffnung handeln. Das Klappengehäuse der erfindungsgemäßen Brandschutzklappe ist mit dem Strömungskanal verbindbar, wobei im verbundenen Zustand der Klappengehäusekanal dann einen Strömungskanalabschnitt des Strömungskanals bildet. Die Dichtung kann eine umlaufende Dichtlippe und/oder ein rundumlaufendes Band sein, das sich bei Erhitzung aufschäumt, so dass ein Wärmetransport und/oder ein Rauchtransport zuverlässig unterbunden wird. Zusätzlich kann die Außenseite des Klappengehäuses thermisch isoliert sein, wobei die thermische Isolierung durch eine Ummantelung des Klappengehäuses mit einem thermisch isolierenden Material erfolgen kann. Das Klappengehäuse kann auch durch eine thermische Isolierung mittig im Bereich der Klappenachse unterbrochen sein, wobei mittels der thermischen Isolierung ein Wärmedurchgang über das (metallische) Klappengehäuse von einem Raum zum anderen verhindert wird.

Im Falle von $n = 2$ entspräche die oben angeführte Gleichung der Ellipsengleichung und die Querschnittsform der Absperrklappe wäre elliptisch. Da jedoch $n > 2$ ist, entspricht die Querschnittsform der Absperrklappe hingegen einer sogenannten Superellipse. Superellipsen interpolieren dabei Ellipsen und Rechtecke. Umso größer der Exponent $n$ ist, desto mehr gleicht sich die entsprechende Superellipse dem Rechteck mit den Querseiten $a$ und $b$ an, so dass die Querschnittsfläche der entsprechenden Superellipse mit steigendem $n$ zunimmt und sich der Querschnittsfläche des interpolierten Rechtecks angleicht. Ellipsen und alle Superellipsen weisen die Gemeinsamkeit auf, dass lediglich an den vier Schnittpunkten der Ellipsenkurve mit den Koordinatenachsen die Krümmung der Ellipsen oder Superellipse Null ist. Somit weist keine Ellipse und keine Superellipse gerade Abschnitte auf, so dass das notwendige Drehmoment für die Überführung der Absperrklappe von der Offenstellung in die Schließstellung lediglich graduierlich ansteigt.

Vorzugsweise ist der Exponent $n$ im Bereich zwischen $3 \geq n > 2$. Weiterhin kann der Exponent $n$ vorzugsweise im Bereich $4 \geq n \geq 3$ sein. Des weiteren ist ein Exponent $n$ im Bereich von $5 \geq n \geq 3$ vorteilhaft.

Vorzugsweise entspricht die Querschnittsfläche des Klappengehäusekanals der Querschnittsfläche des Strömungskanals.

Bei einer entsprechenden Ausgestaltung wird der Luftdurchsatz durch die erfindungsgemäße Absperrvorrichtung nicht reduziert, so dass die Geräuschentwicklung an der Brandschutzklappe aufgrund von Turbulenzen maximal reduziert wird. Weiterhin wird die Saugleistung bzw. Förderleistung durch den Einbau der erfindungsgemäßen Brandschutzklappe nicht beeinträchtigt.

Es sind jedoch auch Abweichungen der Querschnittsflächen des Klappengehäusekanals und des Strömungskanals möglich. So können die Querschnittsflächen zwischen 5 % und 10 %, zwischen 10 % und 15 %, zwischen 15 % und 20 %, zwischen 20 % und 30 % und zwischen 30 % und 50 % voneinander abweichen. Dabei kann entweder die Querschnittsfläche des Strömungskanals größer als die Querschnittsfläche des Klappengehäusekanals oder umgekehrt sein.

Vorzugsweise umfasst die Absperrvorrichtung zumindest ein mit dem Klappengehäuse verbundenes Übergangsstück, das einen Übergangskanal aufweist. Dieser Übergangskanal weist an einer dem Klappengehäuse zugewandten Seite einen ersten Querschnitt auf, der dem Querschnitt des Klappengehäusekanals entspricht. Weiterhin weist der Übergangskanal an einer dem Strömungskanal zugewandten Seite einen zweiten Querschnitt auf, der dem Querschnitt des Strömungskanals entspricht. Das Übergangsstück ist dabei mit dem Strömungskanal derart verbindbar, dass der Übergangskanal einen Strömungskanalabschnitt bildet.

Mittels entsprechend geformter Übergangsstücke werden Verwirbelungen des Luftstroms zwischen dem Strömungskanal und der Absperrvorrichtung reduziert. Entsprechende Übergangsstücke können an der Eintrittsseite der Absperrvorrichtung und/oder an der Austrittsseite der Absperrvorrichtung angeordnet sein. Dabei können die Übergangsstücke unterschiedliche Querschnittsformen aufweisen, die den Querschnittsformen des Strömungskanals eingangsseitig und ausgangsseitig der Absperrvorrichtung angepasst sind.

Vorzugsweise ist das Übergangsstück mit dem Klappengehäuse form- und/oder stoffschlüssig verbunden. Bei einer entsprechenden Ausgestaltung der Absperrvorrichtung ist die Montage der Absperrvorrichtung in einem entsprechend ausgebildeten Lüftungssystem besonders vereinfacht, da die Anschlussseiten der Absperrvorrichtung dem Strömungskanal angepasst sind. Weiterhin könne Lagerkosten, Beschaffungskosten, Montagekosten, Verpackungskosten, Transportkosten und Verwaltungskosten für entsprechend ausgestaltete Absperrvörrichtungen reduziert werden, da die Absperrvorrichtungen nicht separat von den Übergangsstücken gelagert werden müssen.

Vorzugsweise ist das Übergangsstück in seiner Axialausdehnung veränderlich und somit flexibel. Entsprechend ausgebildete Übergangsstücke werden auch als Kompensatoren bezeichnet.

Bei einer entsprechenden Ausführungsform der Absperrvorrichtung können beispielsweise durch eine Erwärmung bewirkte Veränderungen der Längenausdehnung des Strömungskanals durch diese Kompensatoren kompensiert werden, ohne dass Undichtigkeiten zwischen dem Strömungskanal und der Absperrvorrichtung auftreten.

Vorzugsweise umfasst die Absperrvorrichtung eine mit einem Ausdehnungsmedium gefüllte Bourdonfeder, die mit dem Klappengehäuse verbunden und mit der Absperrklappe bewegungsgekoppelt ist. Eine Bourdonfeder ist eine rund gebogene Rohrfeder mit einem von der kreisrunden Form abweichenden Querschnitt, so wie beispielsweise mit einem ovalen, elliptischen oder eine polygonal an diese angenäherten Querschnitt, die sich unter Druckeinwirkung aufbiegt. Bei Überschreiten einer vorgegebenen Temperatur des Ausdehnungsmediums vergrößert sich das Volumen des Ausdehnungsmediums derart, dass die Bourdonfeder ein die Absperrklappe in Schließstellung überführendes Drehmoment entwickelt. Andererseits verkleinert sich bei Unterschreiten der vorgegebenen Temperatur des Ausdehnungsmediums das Volumen des Ausdehnungsmediums derart, dass die Bourdonfeder ein die Absperrklappe in Offenstellung überführendes Drehmoment entwickelt.

Eine entsprechende Ausgestaltung der Absperrvorrichtung hat den Vorteil, dass bei einer als kritisch angesehenen vorgegebenen Temperatur die Absperrvorrichtung selbstständig und ohne Notwendigkeit einer Steuerungseinrichtung mit einem Temperaturfühler und einem Antriebsmotor die Absperrklappe in Schließstellung überführt, wodurch eine Ausdehnung eines Feuers bzw. von Rauch durch das Belüftungssystem unterbunden wird. Gleichzeitig bietet eine entsprechend ausgestaltete Absperrvorrichtung den Vorteil, dass bei Unterschreiten der als kritisch angesehenen vorgegebenen Temperatur die Absperrvorrichtung die Absperrklappe selbstständig wieder in die Offenstellung verfährt, ohne dass beispielsweise ein Sicherheitslot (Halteeinrichtung, die bei Überschreiten einer vorgegebenen Temperatur schmilzt) ersetzt werden müsste.

Aufgrund der speziellen Ausgestaltung der Querschnittsform der Absperrklappe und des Klappengehäusekanals ist für die Überführung der Absperrklappe von der Offenstellung in die Schließstellung und andersherum lediglich ein verringertes Drehmoment notwendig, das von einer entsprechend dimensionierten Bourdonfeder leicht erzeugt werden kann.

Die Bourdonfeder kann dabei in dem Klappengehäusekanal angeordnet sein oder kann außerhalb an dem Klappengehäuse angeordnet sein.

Weitere Vorteile, Einzelheiten und Merkmale der Erfindung ergeben sich nachfolgend aus den erläuterten Ausführungsbeispielen. Dabei zeigen im Einzelnen:

Figur 1:      Eine dreidimensionale durchsichtige Darstellung der erfindungsgemäßen Absperrvorrichtung, wobei sich die Absperrklappe in Offenstellung befindet;

Figur 2A:      Die in Figur 1 dargestellte Absperrvorrichtung in Draufsicht mit durchsichtigem Klappengehäuse;

Figur 2B:      Die in den Figuren 1 und 2A dargestellte Absperrvorrichtung in frontaler Draufsicht;

Figur 3:      Eine dreidimensionale durchsichtige Darstellung der erfindungsgemäßen Absperrvorrichtung, wobei sich die Absperrklappe in Schließstellung befindet;

Figur 4A:      Die in Figur 3 dargestellte Absperrvorrichtung in Draufsicht mit durchsichtigem Klappengehäuse;

Figur 4B:      Die in den Figuren 3 und 4A dargestellte Absperrvorrichtung in frontaler Draufsicht;

Figur 5:      Die erfindungsgemäße Absperrvorrichtung in dreidimensionaler perspektivischer Darstellung;

Figur 6: Eine Zeichnung zur Darstellung der Angleichung der Flächeninhalte einer Superellipse an den Flächeninhalt eines Rechtecks;

Figur 7A: Eine dreidimensionale perspektivische Darstellung eines mit der Absperrvorrichtung verbindbaren Übergangstücks;

Figur 7B: Eine Draufsicht auf das in Figur 7A dargestellten Übergangsstück;

Figur 7C: Eine Seitenansicht des in den Figuren 7A und 7B dargestellten Übergangsstücks;

Figur 8A: Eine weitere Ausführungsform der erfindungsgemäßen Absperrvorrichtung mit zwei Übergangsstücken;

Figur 8B: Eine Detaildarstellung des in Figur 8A mit einem Kreis umrandete Bereichs;

Figur 9: Eine weitere Ausführungsform der erfindungsgemäßen Absperrvorrichtung in Draufsicht;

Figur 10: Eine weitere Ausführungsform der erfindungsgemäßen Absperrvorrichtung in Draufsicht;

Figur 11: Eine Draufsicht einer Abwandlung der in Figur 10 dargestellten Ausführungsform der erfindungsgemäßen Absperrvorrichtung;

Figur 12: Eine dreidimensionale perspektivische Dar-Stellung einer manuellen Antriebs-/ Sicherungseinrichtung;

Figur 13: Eine Querschnittsdarstellung der in Figur 12 dargestellten Antriebs-/ Sicherungseinrichtung;

Figur 14: Eine dreidimensionale perspektivische Darstellung einer Auslöseeinrichtung;

Figur 15: Eine Querschnittsdarstellung eines Teils der Absperrklappe, längs deren Umfang eine zwei Dichtungssegmente umfassende Dichtung angeordnet ist;

Figur 16: Eine Querschnittsdarstellung einer Abwandlung eines Teils der erfindungsgemäßen Brandschutzklappe; und

Figur 17: Eine Querschnittsdarstellung eines Flanschprofils.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

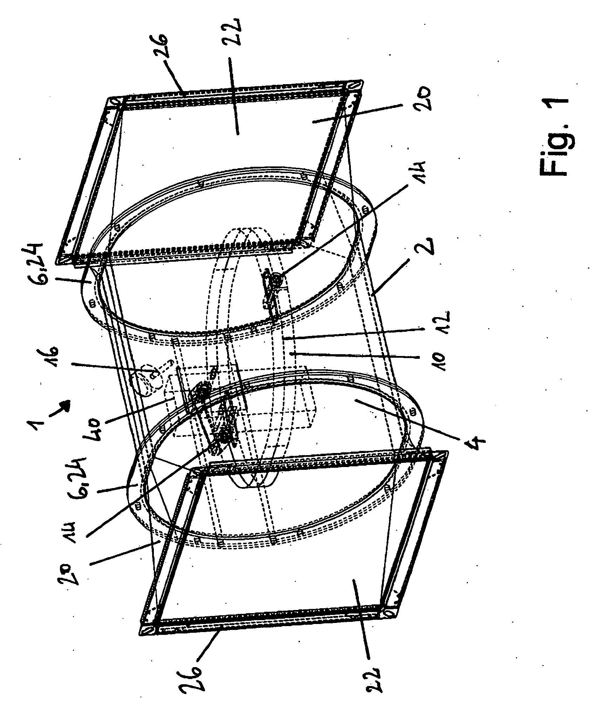

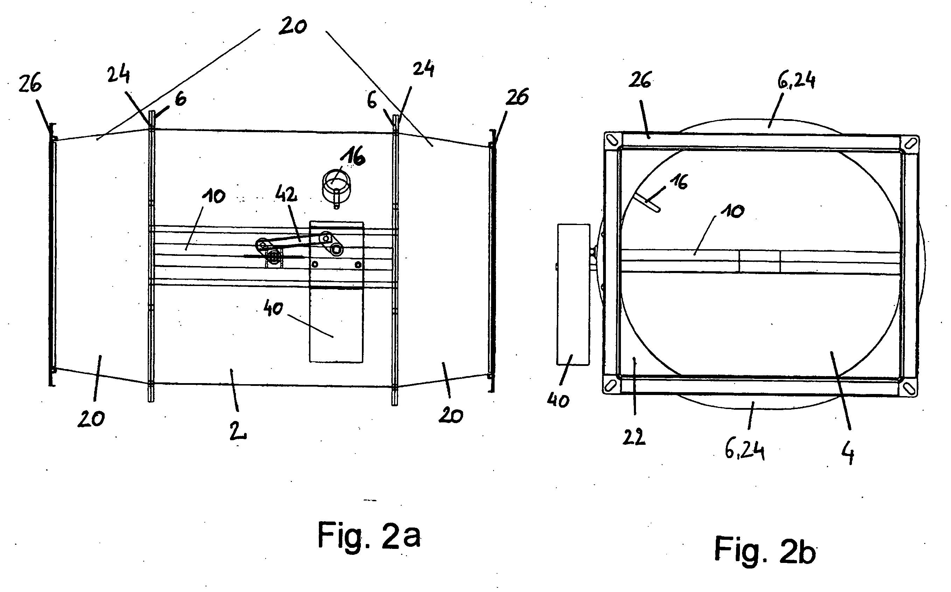

In den Figuren 1, 2A und 2B ist die erfindungsgemäße Absperrvorrichtung 1 bzw. Brandschutzklappe 1 in einem geöffneten Zustand dargestellt, in dem die Absperrvorrichtung 1 strömungsdurchlässig ist.

Die Absperrvorrichtung 1 zum Verschließen eines Strömungskanals für Luft und/oder gasförmige Medien umfasst ein rohrförmiges Klappengehäuse 2 mit einem geraden Klappengehäusekanal 4. Das Klappengehäuse 2 ist durch zwei parallel zueinander ausgerichtete Anschlussflansche 6 begrenzt. Jedoch kann das Klappengehäuse 2 und somit auch der Klappengehäusekanal 4 auch eine Biegung aufweisen, so dass dann die begrenzenden Anschlussflansche mit einem beliebigen Winkel zwischen 0° und 90° zueinander ausgerichtet sind.

In dem Klappengehäusekanal 4 ist mittig eine Absperrklappe 10 an zwei Befestigungspunkten 14 drehbar gelagert, so dass die Absperrklappe 10 in dem Klappengehäusekanal 4 um eine durch die Befestigungspunkte 14 definierte Schwenkachse 14 zwischen einer Offenstellung und einer Schließstellung schwenkbar ist. In den Figuren 1, 2A und 2B befindet sich die Absperrklappe 10 dabei in der Offenstellung, in der der Klappengehäusekanal 4 strömungsdurchlässig ist. In der hier dargestellten Offenstellung steht die Normale der Absperrklappe 10, die senkrecht auf der Fläche der Absperrklappe 10 steht, senkrecht zur Zentralachse des Klappengehäuses 2. Jedoch kann in Offenstellung der Absperrklappe 10 deren Normale auch einen von 90° abweichenden Winkel mit der Zentralachse des Klappengehäuses 2 einschließen, solange nur gewährleistet ist, das der Klappengehäusekanal 4 strömungsdurchlässig ist.

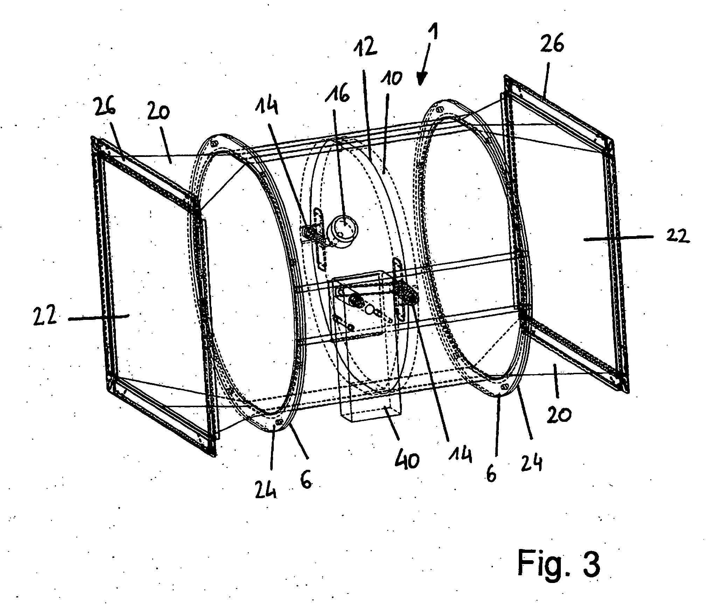

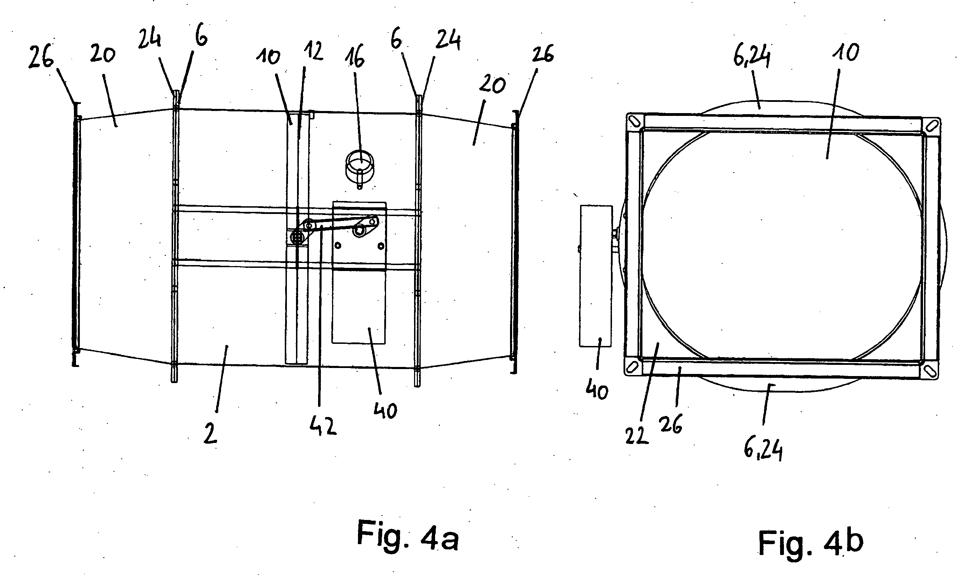

Aus Figur 1 ist ersichtlich, dass längs des Umfangs der Absperrklappe 10 eine Dichtung 12 umlaufend angeordnet ist. Die Dichtung 12 der Absperrklappe 10 dient einer Abdichtung eines Spalts zwischen der Absperrklappe 10 und einer Innenwandung des Klappengehäuses 2 in der in den Figuren 3, 4A und 4B dargestellten Schließstellung der Absperrklappe 10, in der der Klappengehäusekanal 4 strömungsundurchlässig ist.

Die Absperrklappe 10 ist zwischen der Offenstellung und der Schließstellung mittels einer Antriebseinrichtung 40 verschwenkbar. Dabei kann die Antriebseinrichtung 40 als Elektromotor 40, als Hydraulikmotor 40 oder auch als manuell betätigbare Antriebseinrichtung 40 ausgestaltet sein. Die Antriebseinrichtung 40 ist mittels eines dreiteiligen Getriebegestänges 42 mit der Absperrklappe 10 bewegungsgekoppelt.

Weiterhin umfasst die Absperrvorrichtung 1 einen in den Klappengehäusekanal 4 hineinragenden Temperaturfühler 16, der mit der Antriebseinrichtung 40 über eine nicht dargestellte Signalleitung verbunden sein kann. Die Antriebseinrichtung 40 kann eine Steuerungseinrichtung aufweisen, die den Betrieb der Antriebseinrichtung 40 steuert. Alternativ kann eine separate und nicht dargestellte Steuerungseinrichtung verwendet werden, die mit der Antriebseinrichtung 40 und mit dem Temperaturfühler 16 über nicht dargestellte Signalleitungen verbunden ist.

Bei Überschreiten einer vorgegebenen Temperatur, beispielsweise 70° Celsius, steuert die Steuerungseinrichtung die Antriebseinrichtung 40 derart, dass dieser die Absperrklappe 10 über das Getriebegestänge 42 von der Offenstellung in die Schließstellung verschwenkt, so dass der Klappengehäusekanal 4 in der Schließstellung nicht mehr strömungsdurchlässig ist.

Aus den Figuren 1, 2A und 2B ist ersichtlich, dass an den zwei Anschlussflanschen 6 des Klappengehäuses 2 jeweils ein Übergangsstück 20 befestigt ist, die jeweils zwischen dem Klappengehäuse 2 und dem nicht dargestellten Strömungskanal angeordnet sind. Jedoch kann das Klappengehäuse 2 auch mittels der zwei Anschlussflansche 6 direkt mit einem Strömungskanal verbunden werden. Die Übergangsstücke 20 weisen jeweils einen Übergangskanal 22 auf, der von einem ersten Anschlussflansch 24 und von einem zweiten Anschlussflansch 26 begrenzt ist.

Der erste Anschlussflansch 24, der dem Klappengehäuse 2 zugewandt und mit dem Anschlussflansch 6 verbunden ist, weist einen ersten Querschnitt auf, der dem Querschnitt des Klappengehäusekanals 4 entspricht. Da der Querschnitt des Klappengehäusekanals 4 elliptisch bzw. superelliptisch ist, ist auch der erste Querschnitt des Übergangskanals 2 ebenfalls elliptisch bzw. superelliptisch. Der zweite Anschlussflansch 26, der dem Strömungskanal zugewandt und mit diesem verbindbar ist, weist einen zweiten rechteckicken Querschnitt auf, der dem Querschnitt des Strömungskanals entspricht.

Aus Figur 2B ist dabei ersichtlich, dass die Querschnittsfläche des Klappengehäusekanals 4 annähernd gleich groß ist wie die Querschnittsfläche des Übergangskanals 22 im Bereich des zweiten Anschlussflansches 26 und somit annähernd gleich groß ist wie die Querschnittsfläche des nicht dargestellten Strömungskanals.

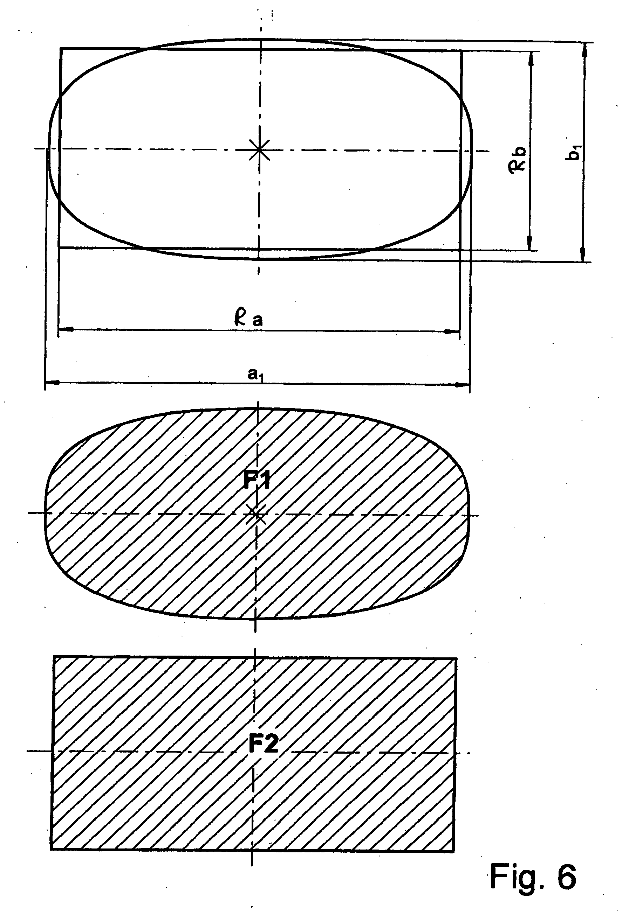

Aus Figur 6 ist eine schematische Darstellung der Querschnittsflächen des Klappengehäusekanals 4 und des Strömungskanals und somit des Übergangskanals 22 im Bereich des zweiten Anschlussflansches 26 dargestellt. Dabei bezeichnet F1 die Querschnittsfläche des Klappengehäusekanals 4, und somit die Fläche einer Superellipse, da die Querschnittsfläche des Klappengehäusekanals 4 in dem dargestellten Ausführungsbeispiel eine Superellipse ist. F2 bezeichnet die Fläche des Strömungskanals. Die rechteckige Querschnittsfläche F2 des Strömungskanals weist eine Rechteckbreite Ra und eine Rechteckhöhe Rb auf. Demgegenüber ist die Breitenerstreckung a1 der Superellipse größer als die Rechteckbreite Ra und die Höhenerstreckung b1 der Superellipse ist ebenfalls größer als die Rechteckhöhe Rb.

Die Höhen- und Breitenerstreckungen des Rechtecks und der Superellipse sind derart gewählt, dass die Flächen F1 und F2 identisch sind. Zwar deckt die Fläche F1 nicht die Eckbereiche der Fläche F1 komplett ab, doch sind die Breitenerstreckung a1 und die Höhenerstreckung b1 der Superellipse größer als die Rechteckbreite Ra und die Rechteckhöhe Rb.

Die Querschnittsfläche des Klappengehäusekanals 4 entspricht somit der Querschnittsfläche des Strömungskanals. Es sind jedoch auch Abweichungen der Querschnittsflächen des Klappengehäusekanals 4 und des Strömungskanals möglich. So können die Querschnittsflächen zwischen 5 % und 10 %, zwischen 10 % und 15 %, zwischen 15 % und 20 % und zwischen 20 % und 30 % und zwischen 30 % und 50 % voneinander abweichen. Dabei kann entweder die Querschnittsfläche des Strömungskanals größer als die Querschnittsfläche des Klappengehäusekanals 4 oder umgekehrt sein.

In den Figuren 3, 4A und 4B ist die in den Figuren 1, 2A und 2B dargestellte Absperrvorrichtung 1 in der Schließstellung dargestellt, in der der Klappengehäusekanal 4 strömungsundurchlässig ist. In der in den Figuren dargestellten Schließstellung sind die Normale der Absperrklappe 10 und die Zentralachse des Klappengehäuses 2 parallel zueinander, so dass die Absperrklappe 10 senkrecht in dem Klappengehäusekanal 4 steht. Jedoch muss in der Schließstellung der Absperrklappe 10 diese nicht notwendigerweise senkrecht in dem Klappengehäusekanal 4 stehen, wenn die Absperrklappe entsprechend dimensioniert ist. Dann muss zum Überführen der Absperrklappe 10 von der Offenstellung in die Schließstellung diese nicht um 90° sondern um einen kleineren Winkel verschwenkt werden.

Durch Aktivieren der Antriebseinrichtung 40 beispielsweise durch eine nicht dargestellte Steuerungseinrichtung, die mit der Antriebseinrichtung 40 und mit dem Temperaturfühler über eine Signalleitung verbunden ist, wird ein durch die Antriebseinrichtung 40 erzeugtes Drehmoment mittels des dreiteiligen Getriebegestänges 42 auf die Schwenkachse 14 der Absperrklappe 10 übertragen, so dass die Absperrklappe 10 von der Offenstellung in die Schließstellung verschwenkt wird.

Im Folgenden wird davon ausgegangen, dass die Offenstellung der Absperrklappe 10 einer 0°-Stellung entspricht, und dass die Schließstellung der Absperrklappe 10 einer 90°-Stellung entspricht. Bei Überführung der Absperrklappe 10 von der Offenstellung in die Schließstellung kommt die um die Absperrklappe 10 umlaufend angeordnete Dichtung 12 mit der Innenwandung des Klappengehäuses 2 und somit mit dem Klappengehäusekanal 4 beispielsweise bei einer 85°-Stellung der Absperrklappe 10 in Kontakt. Je nach Dimensionierung der Dichtung 12, des Klappengehäusekanals 4 und der Absperrklappe 10 kann der Kontakt aber auch bei anderen Winkelstellungen der Absperrklappe erfolgen. Aufgrund der elliptischen bzw. superelliptischen Querschnittsform der Absperrklappe 10, deren Querschnitt im kartesischen Koordinatensystem durch die Ellipsengleichung

$$\left|\frac{x}{a}\right|^n + \left|\frac{y}{b}\right|^n = 1$$

beschrieben wird, wobei a und b die Halbachsen der Ellipse, x die x-Koordinate, y die y-Koordinate und n eine reelle Zahl ist, kommt die Dichtung 12 bei der 85°-Stellung lediglich an zwei sich gegenüberliegenden Punkten mit der Innenwandung des Klappengehäuses 2 in Kontakt.

Bei einer weiteren Verschwenkung der Absperrklappe 10 in Richtung der Schließstellung und somit in Richtung der 90°-Stellung, kommen dann weiter sukzessiv weitere bogenförmige Dichtungsabschnitte der Dichtung 12 mit der Innenwandung des Klappengehäuses 2 in Kontakt. Somit kommt bei der Winkelstellung, bei der die Dichtung 12 erstmalig mit dem Klappengehäusekanal 4 in Kontakt kommt (85° in dem oberen Beispiel), die Dichtung 12 mit dem Klappengehäusekanal 4 nicht über ihre gesamte Längenerstreckung mit dem Klappengehäusekanal in Kontakt, so dass die Dichtung 12 nicht über ihre gesamte Längenerstreckung verformt werden muss. Weiterhin steigt die Haftreibungskraft zwischen dem Klappengehäusekanal 4 und der Dichtung 12 kontinuierlich bei Verschwenken der Absperrklappe 10 in die 90°-Stellung an. Das von der Antriebseinrichtung 40 aufzubringende Drehmoment steigt folglich kontinuierlich bei Überführen der Absperrklappe in die Schließstellung an. Bei Überführen einer rechteckigen Absperrklappe in einem rechteckigen Klappengehäusekanal muss beim ersten Kontakt der Dichtung mit dem Klappengehäusekanal hingegen sofort das maximale Drehmoment erzeugt werden.

Darüber hinaus ist das Verhältnis des Umfangs zur von dem Umfang umschlossenen Fläche bei einer Ellipse günstiger (kleiner) als bei einem Rechteck oder einem Quadrat, so dass das aufzubringende Drehmoment zum Schließen bzw. Öffnen der Absperrklappe 10 mit einer elliptischen bzw. superelliptischen Querschnittsgeometrie aufgrund des kleineren Umfangs kleiner ist als bei einer Absperrklappe 10 mit einer beispielsweise rechteckförmigen Querschnittsgeometrie. Daher kann bei einer erfindungsgemäßen elliptischen Ausgestaltung der Brandschutzklappe 1 bzw. der Absperrklappe 10 und des Klappengehäusekanals 4 die Antriebseinrichtung 40 zum Verschwenken der Absperrklappe 10 kleiner ausfallen als bei einer Brandschutzklappe mit einer rechteckförmigen Absperrklappe.

Wie oben bereits mit Bezug auf die Figuren 2B, 4B und 6 erläutert, weist die Absperrklappe 10 mit einer elliptischen bzw. superelliptischen Querschnittsgeometrie einen großen Flächeninhalt auf. Somit liegt bei Einbau der erfindungsgemäßen Brandschutzklappe 1 in einem beispielsweise rechteckförmigen oder quadratischen Strömungskanal keine oder lediglich eine kleine Verengung durch die Brandschutzklappe 1 vor, so dass lediglich kleine Verwirbelungen der Strömungsluft bewirkt werden. Dadurch vermindern sich die durch Turbulenzen bedingte Geräuschentwicklung durch die erfindungsgemäße Brandschutzklappe 1.

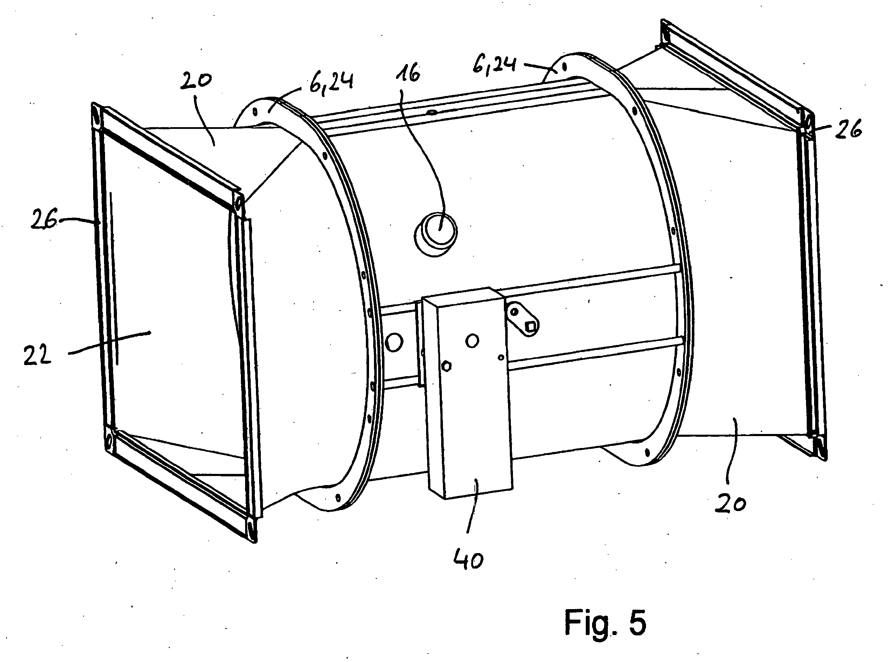

In der in den Figuren 1 bis 5 dargestellten Ausführungsform der Absperrvorrichtung 1 ist die Absperrvorrichtung 1 mit jeweils zwei Übergangsstücken 20 über einen Anschlussflansch 6 mit jeweils einen ersten Anschlussflansch 24 der Übergangsstücke 20 verbunden.

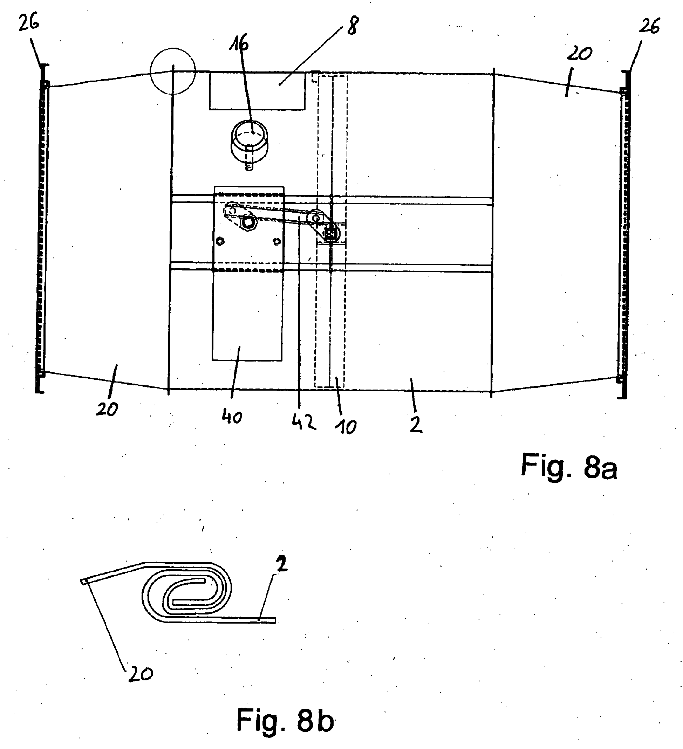

Aus den Figuren 8A und 8B ist ersichtlich, dass eine Verbindung zwischen dem Klappengehäuse 2 und den Übergangsstücken 20 auch über eine sogenannte Verbördelung möglich ist. Dabei greifen die Flächenenden des Übergangsstücks 20 spiralförmig in die Flächenenden des Klappengehäusekanals 2 ein, wie in Figur 8B dargestellt. Durch weiteres Verpressen der in Figur 8B dargestellten Struktur kann die Verbindung zwischen dem Übergangsstück 20 und dem Klappengehäusekanal 2 weiter verfestigt werden.

Aus Figur 8A ist ersichtlich, dass das Klappengehäuse 2 eine Revisionsöffnung 8 zur Wartung der Absperrvorrichtung 1 aufweist. Diese Revisionsöffnung 8 kann auch in der in den Figuren 1 bis 5 dargestellten Absperrvorrichtung 1 vorgesehen sein.

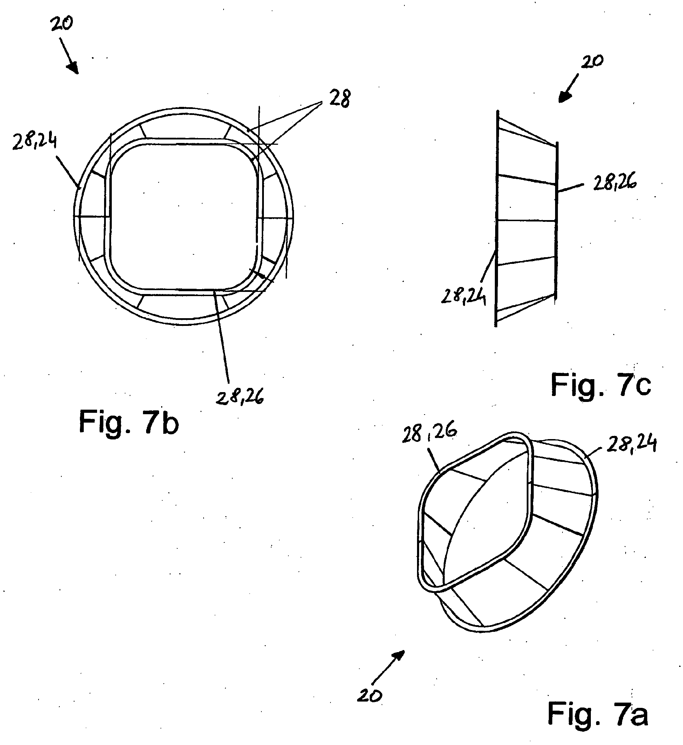

Aus den Figuren 7A, 7B und 7C ist ein Übergangsstück 20 in dreidimensional perspektivischer Darstellung, in Draufsicht und in Seitenansicht dargestellt. Bei diesem dargestellten Übergangsstück 20 ist die Querschnittsfläche des strömungskanal-seitigen Endes kleiner als die Querschnittsfläche des klappengehäuseseitigen Endes, so dass folglich die Querschnittsfläche der Absperrvorrichtung 1 bzw. die Querschnittsfläche der Absperrklappe 10 größer ist als die Querschnittsfläche des Strömungskanals. Die jeweiligen Endflächen 24, 26 können entweder jeweils einen Anschlussflansch aufweisen oder können alternativ einen Bördelrand aufweisen. Das in den Figuren 7A bis 7C dargestellte Übergangsstück 20 kann aus einem flächigen Material herausgeschnitten werden (z. B. ein Blech, ein flexibles und feuerfestes Flächenmaterial, usw.), und durch aneinander Fügen und miteinander Verbinden von zwei freien Enden des herausgeschnittenen flächigen Materials entsteht das in den Figuren 7A bis 7C dargestellte dreidimensionale Übergangsstück 20.

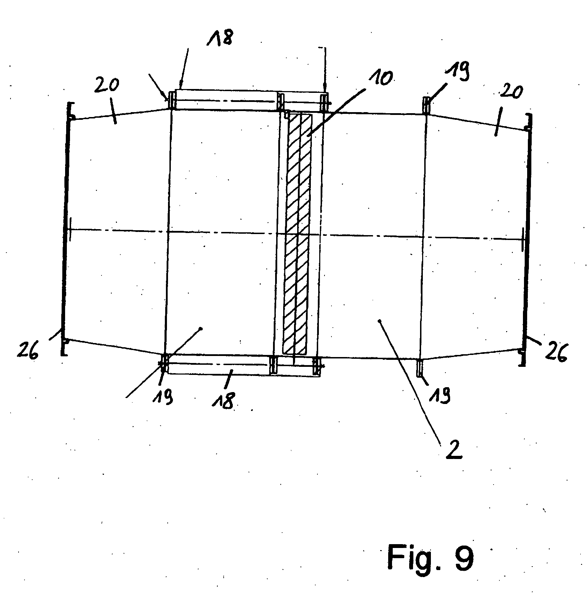

Wie in Figur 9 dargestellt, kann alternativ das Klappengehäuse 2 auch einstückig mit den Übergangsstücken 20 ausgebildet sein. Die in Figur 9 dargestellte Absperrvorrichtung 1 weist an ihrer Außenseite Befestigungseinrichtungen 19 in Form von Gewindestangen 19 auf, mittels denen die Absperrvorrichtung 1 beispielsweise in einem Mauerwerk oder an einer Befestigungskonstruktion befestigt werden können. Diese Befestigungseinrichtungen 19 können selbstverständlich auch in den Absperrvorrichtungen 1 gemäß den Figuren 1 bis 8 verwendet werden.

Aus Figur 9 ist weiterhin ersichtlich, dass die linke Seite des Klappengehäuses 2 mit einer umlaufenden thermischen Isolierung 18 versehen ist, so dass eine Wärmeübertragung von der Absperrvorrichtung 1 auf eine Unterkonstruktion bzw. auf einer Mauerkonstruktion vermindert wird.

In der Darstellung der Figur 9 stellt die rechte Seite der Absperrvorrichtung 1 die Motorseite dar, also die Seite der Absperrvorrichtung 1, an der ein Abzugsmotor bzw. ein Ventilator angeordnet ist. Die linke Seite der in Figur 9 dargestellten Absperrvorrichtung 1 stellt die Seite dar, die an einem Lüftungssystem angeschlossen ist. Durch Schließen der Absperrklappe 10 kann warme bzw. heiße Luft und Rauch lediglich bis zu der Absperrklappe 10 gelangen, so dass die thermische Isolierung 18 lediglich auch in diesem Bereich um das Klappengehäuse 2 angeordnet ist.

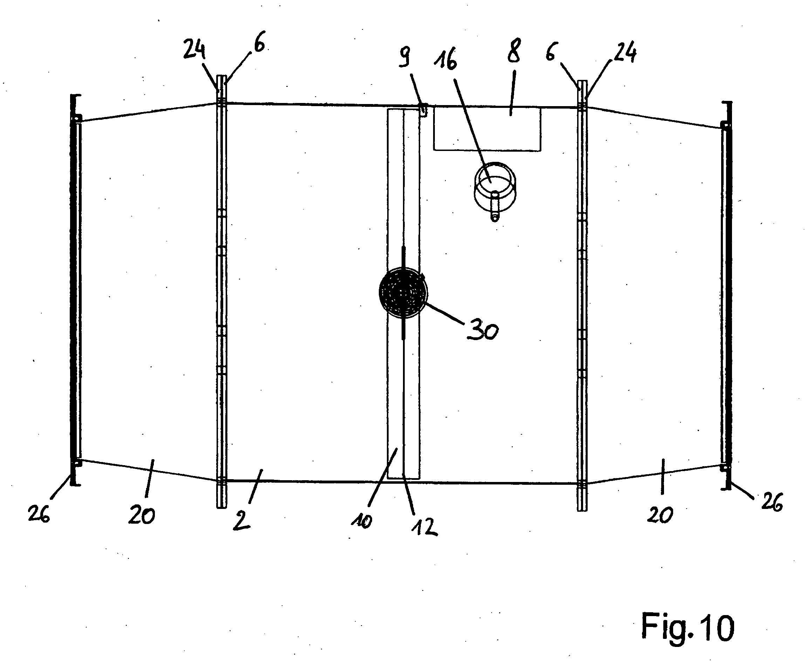

Figur 10 zeigt eine weitere Ausführungsform der erfindungsgemäßen Absperrvorrichtung 1. Die Absperrvorrichtung 1 umfasst eine mit einem Ausdehnungsmedium gefüllte Bourdonfeder 30, die mit dem Klappengehäuse 2 verbunden und mit der Absperrklappe 10 bewegungsgekoppelt ist. Die Bourdonfeder 30 ist eine rundgebogene Rohrfeder 30 mit einem ovalen Querschnitt, die sich unter interner Druckeinwirkung aufbiegt. Die Bourdonfeder 30 kann entweder in dem Klappengehäusekanal 4 oder außerhalb des Klappengehäusekanals 4 und somit an der Außenseite des Klappengehäuses 2 angeordnet sein.

Bei Überschreiten einer vorgegebenen Temperatur des Ausdehnungsmediums, z. B. bei Überschreiten von 72° Celsius, vergrößert sich das Volumen des Ausdehnungsmedium derart, dass die Bourdonfeder 30 ein die Absperrklappe 10 in Schließstellung überführendes Drehmoment entwickelt. In Figur 10 ist die Absperrvorrichtung 1 gezeigt, bei der die Absperrklappe 10 sich in Schließstellung befindet. In Schließstellung der Absperrklappe 10 schlägt die Absperrklappe 10 an einen Anschlag 9 an, so dass ein Überdrehen der Absperrklappe 10 über die Schließstellung hinaus vermieden wird.

Wenn sich andererseits die Temperatur des Ausdehnungsmediums wieder unter die vorgegebene Temperatur absenkt, zieht sich das Ausdehnungsmedium 10 zusammen, so dass sich das Volumen des Ausdehnungsmediums verkleinert. Aufgrund der Verkleinerung des Volumens des Ausdehnungsmediums vermindert sich der Druck innerhalb de Bourdonfeder 30, so dass diese ein die Absperrklappe in Offenstellung überführendes Drehmoment erzeugt.

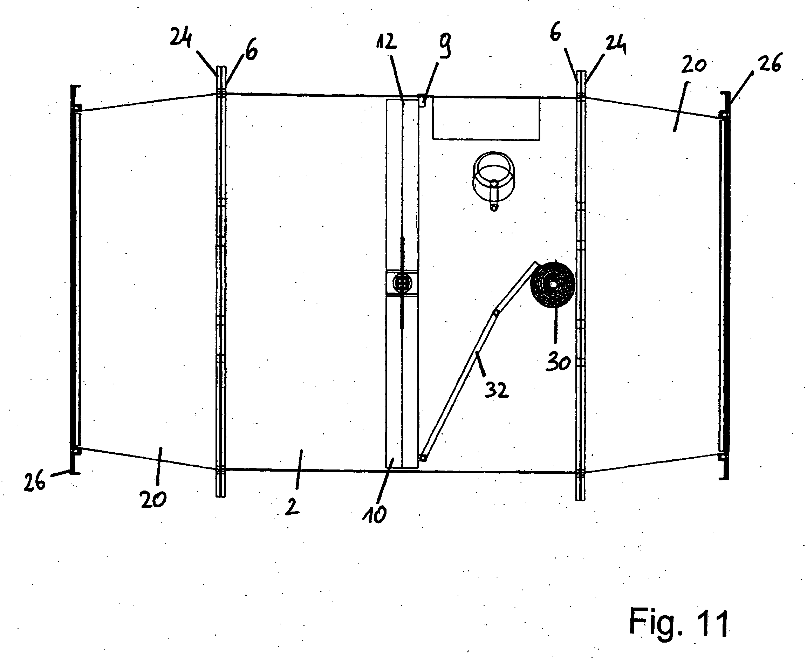

Bei der in Figur 10 dargestellten Ausführungsform der Absperrvorrichtung 1 ist die Bourdonfeder 30 auf der Schwenkachse 14 angeordnet. Bei der Ausführungsform gemäß Figur 11 ist die Bourdonfeder 30 nicht auf der Schwenkachse 14 angeordnet. Vielmehr ist ein freier Schenkel der Bourdonfeder 30 über ein zweiteiliges Getriebegestänge 32 mit der Absperrklappe 10 verbunden. Somit ist die Bourdonfeder 30 mittels des Getriebegestänges 32 mit der Absperrklappe 10 bewegungsgekoppelt. Die übrige Funktionsweise der in Figur 11 dargestellten Absperrvorrichtung 1 ist identisch mit der Funktionsweise der in Figur 10 dargestellten Absperrvorrichtung 1.

Die Verwendung einer Bourdonfeder 30 als Antriebseinrichtung für die Absperrklappe 10 hat den Vorteil, dass bei Überschreiten einer als kritisch angesehenen vorgegebenen Temperatur die Absperrvorrichtung 1 selbstständig und ohne Notwendigkeit einer Steuerungseinrichtung mit einem Temperaturfühler und einem Antriebsmotor die Absperrklappe 10 in Schließstellung überführt werden kann, wodurch die Ausdehnung eines Feuers bzw. von Rauch durch das Belüftungssystem unterbunden wird. Gleichzeitig bietet die Verwendung einer Bourdonfeder 30 in einer Absperrvorrichtung 1 den Vorteil, dass bei Unterschreiten der als kritisch angesehenen vorgegebenen Temperatur die Absperrvorrichtung die Absperrklappe 10 selbstständig wieder in die Offenstellung verfährt. Ein aus dem Stand der Technik bekanntes Schmelzlot, das die Absperrklappe 10 in der Offenstellung hält und bei Überschreiten der vorgegebenen Temperatur schmilzt, muss für einen erneuten Einsatz nicht ersetzt werden.

Es ist zu beachten, das ein Überführen der Absperrklappe 10 in die Schließstellung durch die Bourdonfeder 30 lediglich sinnvoll und möglich ist, wenn die Temperaturentwicklung nicht so groß war, dass die Absperrklappe 10 aufgrund der zu hohen Temperaturen zerstört worden ist. Die Bourdonfeder 30 gewährleistet daher ein sicheres Überführen der Absperrklappe 10 in die Schließstellung bei Überschreiten der vorgegebenen Temperatur (beispielsweise 72°C), wohingegen die Bourdonfeder 30 die Absperrklappe 10 nur dann wieder in die Offenstellung überführen kann, wenn die Absperrklappe 10 aufgrund sehr hoher Temperaturen nicht zerstört worden ist. Wenn hingegen lediglich eine Kaltraumentwicklung vorlag, wird die Absperrklappe 10 mittels der Bourdonfeder 30 bei Unterschreiten der vorgegebenen Temperatur zuverlässig wieder in die Offenstellung überführt.

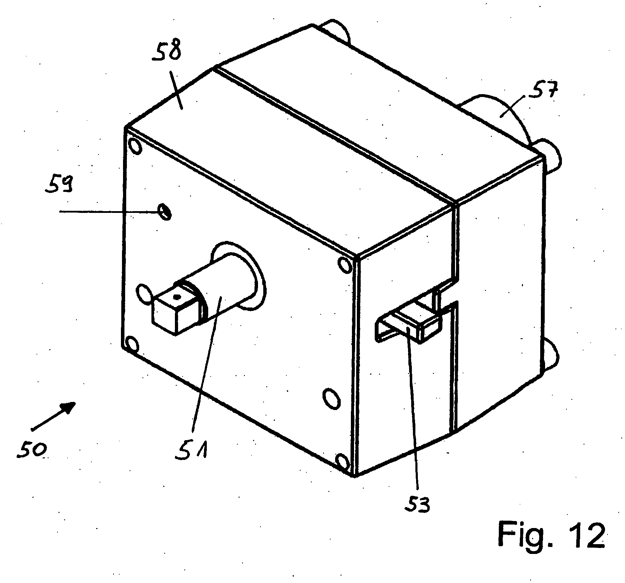

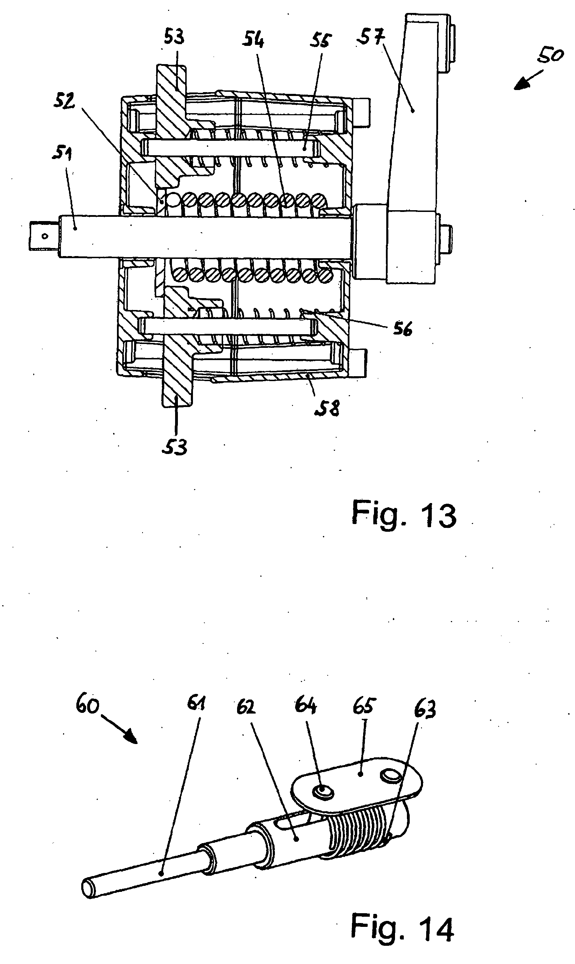

In den Figuren 12 und 13 ist eine manuelle Antriebs-/Sicherungseinrichtung 50 dargestellt, die anstelle der Antriebseinrichtung 40 bzw. anstelle der Bourdonfeder 30 oder alternativ zusätzlich zur Bourdonfeder 30 und zu der Antriebseinrichtung 40 verwendet werden kann. Die manuelle Antriebs-/Sicherungseinrichtung 50 umfasst eine Antriebswelle 51, die mit der Schwenkachse 14 der Absperrklappe 10 bewegungsgekoppelt werden kann. Die Antriebswelle 51 ist mit einer Vorspanneinrichtung 54 in Form einer Drehfeder 54 mittels einer Scheibe 52 drehfest verbunden, wobei die Scheibe 42 mit der Antriebswelle 51 und mit der Drehfeder 54 fest verbunden ist. Die Drehfeder 54 ist auch mit einem Gehäuse 58 der manuelle Antriebs-/Sicherungseinrichtung 50 verbunden.

Die Drehfeder 54 spannt die Antriebswelle 51 und somit die Absperrklappe 10 derart vor, dass die mit der Antriebswelle 51 bewegungsgekoppelte Absperrklappe 10 in Richtung der Schließstellung vorgespannt ist. Die manuelle Antriebs-/Sicherungseinrichtung 50 umfasst auch zwei Halteeinrichtungen 53 in Form von Sicherungshebeln 53, die in Aussparungen der Scheibe 52 eingreifen und ein Verdrehen der Antriebswelle 51 verhindern. Die Halteeinrichtungen 53 sind auf Führungsbolzen 55 verschiebbar gelagert und mittels Druckfedern 56 vorgespannt.

Durch Betätigen des in Figur 13 oben dargestellten Sicherungshebels 53 entgegen der durch die Druckfeder 56 aufgebrachten Vorspannkraft greift die Halteeinrichtung 53 nicht mehr in eine entsprechend vorgesehene Aussparung der Scheibe 52 ein, so dass die Drehfeder 54 die Antriebswelle 51 und die mit der Antriebswelle 51 bewegungsgekoppelte Absperrklappe 10 in Schließstellung überführen kann.

Die in Figur 13 unten dargestellte Halteeinrichtung 53 greift bei Überführen der Absperrklappe 10 in die Schließstellung in eine entsprechend vorgesehene weitere Aussparung der Scheibe 52 ein, so dass die Absperrklappe 10 aus der Schließstellung nicht mehr in die Offenstellung verschwenkt werden kann. Lediglich durch Betätigen der in Figur 13 unten dargestellten Halteeinrichtung 53 entgegen der durch die Druckfeder 56 aufgebrachten Vorspannkraft kann die Absperrklappe 10 mittels eines mit der Antriebswelle 51 drehfest verbundenen Bedienhebel 57 von der Schließstellung wieder in die Offenstellung überführt werden, wodurch die Drehfeder 54 wieder vorgespannt wird.

Aus Figur 12 ist ersichtlich, dass in dem Gehäuse 58 frontseitig eine Bohrung 59 für einen Auslösestift 61 vorgesehen ist.

Figur 14 zeigt eine Auslöseeinrichtung 60. Die Auslöseeinrichtung 60 umfasst einen Auslösestift 61, der in einer Stiftführung 62 verschiebbar gelagert ist. Der Auslösestift 61 steht mit einem Bolzen 64 in Kontakt, der mittels einer als Schmelzlot 65 ausgebildeten Halteeinrichtung 65 bzw. Sicherungseinrichtung 65 mittels eines weiteren Bolzens mit der Stiftführung 62 verbunden ist. Zwischen den zwei Bolzen ist eine Druckfeder 63 angeordnet, die in dem in Figur 14 dargestellten Zustand vorgespannt, das heißt gestaucht ist. Bei Überschreiten einer vorgegebenen Temperatur schmilzt das Schmelzlot 65, so dass der Bolzen 64 durch die Druckfeder 63 verschoben wird. Aufgrund der Verbindung des Auslösestifts 61 mit dem Bolzen 64 wird der Auslösestift 61 aus der Stiftführung 62 herausgedrückt.

Wie bereits oben erwähnt, kann der Auslösestift 61 der Auslöseeinrichtung 60 durch die Bohrung 59 des Gehäuses 58 ragen und mit den in Figur 13 oben dargestellten Sicherungshebel 13 in Kontakt stehen. Bei Überschreiten einer vorgegebenen Temperatur wird der Auslösestift 61 mittels der Druckfeder 63 weiter in das Gehäuse 58 hineingeschoben, so dass der Auslösestift 61 den Sicherungshebel 53 wie oben beschrieben gegen die durch die Druckfeder 56 aufgebrachte Vorspannkraft nach hinten drückt. Somit wird die Drehfeder 54 freigegeben, so dass die Drehfeder 54 die Antriebswelle 51 und die mit der Antriebswelle 51 bewegungsgekoppelte Absperrklappe 10 in die Schließstellung überführen kann.

Mittels der in den Figuren 12 bis 14 dargestellten manuellen Antriebs-/Sicherungseinrichtung 50 kann die Absperrklappe 10 manuell von der Offenstellung in die Schließstellung überführt werden. Weiterhin kann mittels der manuellen Antriebs-/Sicherungseinrichtung 50 die Absperrklappe 10 durch einfaches Betätigen einer Halteeinrichtung 53 von der Offenstellung in die Schließstellung überführt werden, und weiterhin kann die Absperrklappe 10 automatisch mittels der Auslöseeinrichtung 60 und der manuellen Antriebs-/Sicherungseinrichtung 50 von der Offenstellung in die Schließstellung überführt werden.

Die beschriebene manuelle Antriebs-/ Sicherungseinrichtung 50 wird zusammen mit der Auslöseeinrichtung 60 an der Außenseite des Absperrvorrichtung 1 befestigt, so dass nach einer Auslösung der Auslöseeinrichtung 60 das Schmelzlot 65 oder direkt die gesamte Auslöseeinrichtung 60 ohne Probleme ausgetauscht werden kann, ohne dass die Absperrvorrichtung 1 geöffnet werden muss.

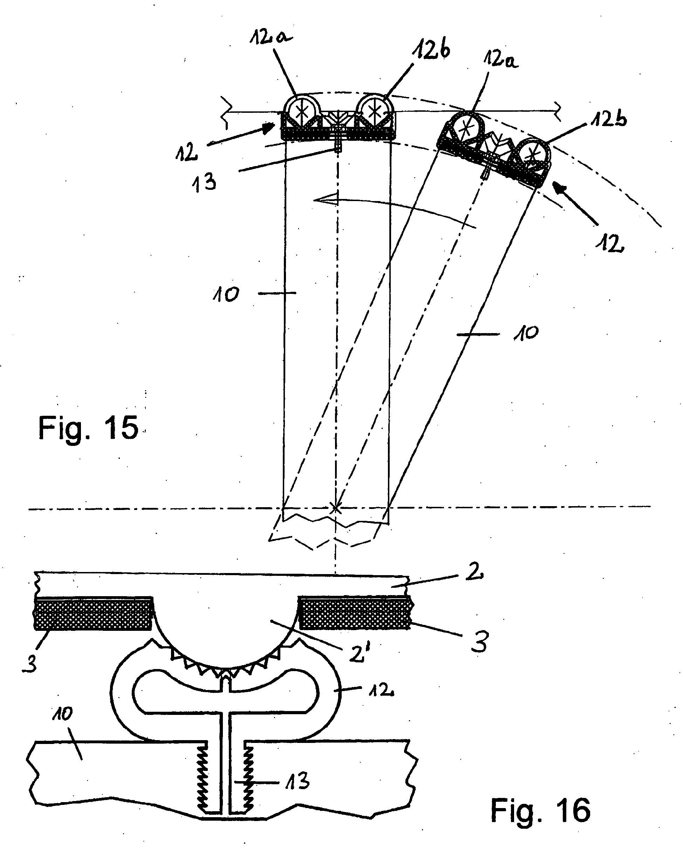

Figur 15 zeigt eine Querschnittsdarstellung eines Teils der Absperrklappe 10 in Schließstellung (links in Figur 15) und in einer Stellung zwischen der Schließstellung und der Offenstellung (rechts in Figur 15). Die längs des Umfangs der Absperrklappe 10 angeordnete Dichtung 12 umfasst zwei Dichtungssegmente 12a, 12b, die halbkreisförmige Querschnitte aufweisen. In dem in Figur 15 nicht dargestellten Klappengehäusekanal 4 sind an dessen Innenwandung zwei Sicken vorgesehen, an denen die Dichtsegmente 12a, 12b in Schließstellung der Absperrklappe 10 formschlüssig anliegen. Die Dichtung 12, die auch als Dichtlippe 12 bezeichnet werden kann, besteht aus einem elastischen Material, beispielsweise ein Elastomer wie PVC, PU oder Kunstkautschuk (EDPM), mit einer Härte von beispielsweise Shore-A 65, bei niedrigeren Temperaturbelastungen und aus Siliconkautschuk bei höheren Temperaturbelastungen. Die obere, dem Klappengehäusekanal zugewandte Hohlkammer ist mit innen liegenden Fachwerkstreben derart versteift, dass beim Einschwenken der Absperrklappe 10 in Schließstellung die seitlich resultierende, zur senkrecht auf den geometrischen Mittelpunkt der Absperrklappe 10 wirkende Kraft die Dichtlippe 12 am seitlichen Versatz hindert. Die untere Kammer ist für die Aufnahme eines intumeszierenden halbsteifen Bandes geeignet. Die Dichtlippe 12 ist beim Umreifen der Klappe 10 durch radial ausgerichtete Bohrungen und Verschraubungen 13 mit der Klappe 10 verbunden.

Figur 16 zeigt eine Querschnittsdarstellung einer Abwandlung der erfindungsgemäßen Brandschutzklappe 1. Das Klappengehäuses 2 weist an seiner Innenseite eine in den Klappengehäusekanal 4 ragende Radialverdickung 2' bzw. Wulst 2' auf, die in Schließstellung der Absperrklappe 10 der Absperrklappenaußenkante gegenüberliegend angeordnet ist. In Schließstellung der Absperrklappe 10 steht die Dichtung 12 mit der Radialverdickung 2' in Kontakt und ist entsprechend deformiert. Bei einem Druckunterschied zwischen den zwei durch die Absperrklappe 10 getrennten Bereichen der Brandschutzklappe 1 wird die Dichtunf 12 gegen die Radialverdickung 2' gedrückt, so dass durch die Radialverdickung 2' und die Dichtunf 12 ein Gasaustausch zwischen Brandschutzklappenbereichen zuverlässig entgegengewirkt wird.

Ferner ist aus Figur 16 ersichtlich, dass das intumeszierende Band 3 an der Innenwandung des Klappengehäuses 2 angebracht und durch die Radialverdickung 2' getrennt ist. Dies hat den Vorteil, dass das intumeszierende Band 3 schneller aufschäumt, da das Klappengehäuse 2 in einem Brandfall eine höhere Temperatur aufweist als die Absperrklappe 10.

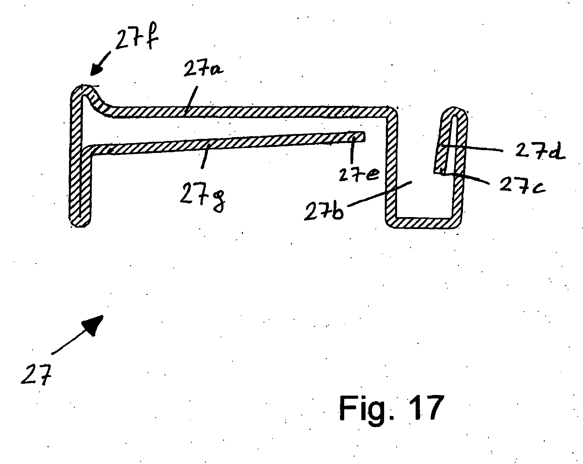

Der erste Anschlussflansch 24 des Übergangsstücks 20 umfasst ein Flanschprofil 27 und der zweite Anschlussflansch 26 des Übergangsstücks 20 umfasst vier Flanschprofile 27. Figur 17 zeigt ein entsprechendes Flanschprofil 27 im Querschnitt. Die vier Flanschprofile 27 des zweiten Anschlussflansches 26 sind mittels vier nicht dargestellten Eckwinkel miteinander verbunden.

Das Flanschprofil 27 weist einen zentralen Montageschenkel 27a auf, der im montierten Zustand quer zur Längs- oder Anbaurichtung des Übergangsstücks 20 ausgerichtet liegt. Kanalinnenseitig, also dem Übergangskanal 22 zugewandt liegend, geht der Montageschenkel 27a in eine U-förmige Nut 27b über, die nicht zwingend rechteckförmig gestaltet sein muss, sondern beispielsweise auch eine eher kreisförmige nach Art einer Sicke gestaltete Hinterschneidung aufweisen kann, wie dies grundsätzlich aus der DE 41 40 870 A1 bekannt ist. Das innenliegende Materialende 27c des Flanschmaterials ist im Querschnitt gemäß Figur 17 Widerhacken-ähnlich in Richtung Nut 27b hineinragend umgekantet und bildet somit eine Widerhacken ähnliche Halteleiste 27d.

Die zum Materialende 27c gegenüberliegende äußere Begrenzungskante 27e des Flanschprofils 27 ist zur Erzielung einer höheren Steiflichkeit unter Ausbildung einer sich quer zum Montageschenkel 27a erstreckenden und über diese überstehende Versteifungsabwinkelung 27f zweimal konvex und einmal konkav gekantet, und geht dann in einen Parallelschenkel 27g über, der im geringen Abstand benachbart und parallel oder zumindest ansatzweise parallel zum Montageschenkel 27a verläuft. Die Begrenzungskante 27e endet dann kurz vor der im Querschnitt U-förmigen Nut 27b.

Eine nicht dargestellte Verankerungslippe eines Mantelmaterials, das die Wandung des Übergangsstücks 20 bildet, kann in die Nut 27b eingefügt werden und die Halteleiste 27d hintergreifen. Nach Einfügen dieser Dichtlippe, beispielsweise eines Balges, in die entsprechend umlaufende Nut 27b des ersten Anschlussflansches 24 oder des zweiten Anschlussflansches 26 ist der Balg unverlierbar fest am Flanschprofil 27 befestigt.

Das Flanschprofil 27 muss nicht notwendigerweise den Parallelschenkel 27g aufweisen, denn die oben beschriebene Funktionalität wird auch ohne den Parallelschenkel 27 g erreicht.

**Bezugszeichenliste:**

| | |
|---|---|
| 1 | Absperrvorrichtung, Brandschutzklappe |
| 2 | Klappengehäuse |
| 2' | Radialverdickung / Wulst |
| 3 | intumeszierendes Band |
| 4 | Klappengehäusekanal |
| 6 | Anschlussflansch (des Klappengehäuses) |
| 8 | Revisionsöffnung |
| 9 | Anschlag |
| 10 | Absperrklappe |
| 12 | Dichtung |
| 12a, 12b | Dichtungssegment |
| 13 | Verschraubung |
| 14 | Befestigungspunkt, Schwenkachse |
| 16 | Temperaturfühler |
| 18 | thermische Isolierung (des Klappengehäuses) |
| 19 | Befestigungseinrichtung, Gewindestange |
| 20 | Übergangsstück |
| 22 | Übergangskanal |
| 24 | erster Anschlussflansch (des Übergangsstücks) |
| 26 | zweiter Anschlussflansch (des Übergangsstücks) |
| 27 | Flanschprofil |
| 27a | Montageschenkel |
| 27b | Nut |
| 27c | Materialende (des Flanschprofils) |
| 27d | Halteleiste (des Flanschprofils) |
| 27e | Begrenzungskante |
| 27f | Versteifungsabwinkelung |
| 27g | Parallelschenkel |
| 28 | Bördelrand (des Übergangsstücks) |
| 30 | Bourdonfeder |
| 32 | Getriebegestänge (zwischen Bourdonfeder und Absperrklappe) |
| 40 | Antriebseinrichtung, Motor |
| 42 | Getriebegestänge |
| 50 | manuelle Antriebs-/ Sicherungseinrichtung |
| 51 | Antriebswelle (der manuellen Antriebseinrichtung) |
| 52 | Scheibe (der manuellen Antriebseinrichtung) |
| 53 | Halteeinrichtung / Sicherungshebel (der manuellen Antriebseinrichtung) |
| 54 | Vorspanneinrichtung, Drehfeder |
| 55 | Führungsbolzen |
| 56 | Druckfeder |
| 57 | Bedienhebel |
| 58 | Gehäuse |

| | |
|---|---|
| 59 | Bohrung für Auslösestift |
| 60 | Auslöseeinrichtung |
| 61 | Auslösestift |
| 62 | Stiftführung |
| 63 | Druckfeder |
| 64 | Bolzen |
| 65 | Halteeinrichtung, Schmelzlot |
| F1 | Fläche der Superellipse |
| F2 | Fläche des Rechtecks |
| Ra | Rechteckbreite |
| Rb | Rechteckhöhe |
| a1 | Breitenerstreckung der Superellipse |
| b1 | Höhenerstreckung der Superellipse |

## Patentansprüche

1. Absperrvorrichtung (1) zum Verschließen eines Strömungskanals für Luft und/oder gasförmige Medien, wobei die Absperrvorrichtung (1) folgende Merkmale aufweist:

   - die Absperrvorrichtung (1) umfasst ein Klappengehäuse (2) mit einem Klappengehäusekanal (4);
   - die Absperrvorrichtung (1) umfasst eine Absperrklappe (10), die in dem Klappengehäusekanal (4) auf einer Schwenkachse (14) schwenkbar gelagert ist;
   - längs des Umfangs der Absperrklappe (10) ist eine Dichtung (12) angeordnet;
   - die Absperrklappe (10) ist zwischen einer Offenstellung und einer Schließstellung schwenkbar;
   - in Offenstellung der Absperrklappe (10) ist der Klappengehäusekanal (4) strömungsdurchlässig;
   - in Schließstellung der Absperrklappe (10) verschließt diese den Klappengehäusekanal (4), so dass der Klappengehäusekanal (4) strömungsundurchlässig ist; und
   - der Klappengehäusekanal (4) und die Absperrklappe (10) weisen jeweils elliptische Querschnitte auf,

   **dadurch gekennzeichnet, dass** die Querschnittsform der Absperrklappe (10) superelliptisch ist und im kartesischen Koordinatensystem der Ellipsengleichung

$$\left|\frac{x}{a}\right|^{n} + \left|\frac{y}{b}\right|^{n} = 1$$

   entspricht, wobei a und b die Halbachsen der Ellipse, x die X-Koordinate, y die Y-Koordinate und n eine reele Zahl im Bereich $10 \geq n > 2$ sind.

2. Absperrvorrichtung nach einem der vorangehenden Ansprüche, **dadurch gekennzeichnet, dass** die elliptische Form des Querschnitts der Absperrklappe (10) durch ein Polygon angenähert ist.

3. Absperrvorrichtung (1) nach einem der vorangehenden Ansprüche, **dadurch gekennzeichnet, dass** die Querschnittsfläche des Klappengehäusekanals (4) der Querschnittsfläche des Strömungskanals entspricht.

4. Absperrvorrichtung (1) nach einem der vorangehenden Ansprüche, **gekennzeichnet durch** die folgenden Merkmale:

   - die Absperrvorrichtung (1) umfasst ferner zumindest ein mit dem Klappengehäuse (2) verbundenes Übergangsstück (20) mit einem Übergangskanal (22);
   - der Übergangskanal (22) weist an einer dem Klappengehäuse (2) zugewandten Seite einen ersten Querschnitt auf, der dem Querschnitt des Klappengehäusekanals (4) entspricht;
   - der Übergangskanal (22) weist an einer dem Strömungskanal zugewandten Seite einen zweiten Querschnitt auf, der dem Querschnitt des Strömungskanals entspricht; und
   - das Übergangsstück (20) ist mit dem Strömungskanal derart verbindbar, dass der Übergangskanal (22) einen Strömungskanalabschnitt bildet.

5. Absperrvorrichtung (1) nach einem der Ansprüche 1 bis 3, **gekennzeichnet durch** die folgenden Merkmale:

   - die Absperrvorrichtung (1) umfasst ferner zumindest ein mit dem Klappengehäuse (2) verbundenes Übergangsstück (20) mit einem Übergangskanal (22);
   - der Übergangskanal (22) weist an einer dem Klappengehäuse (2) zugewandten Seite einen ersten Querschnitt auf, der dem Querschnitt des Klappengehäusekanals (4) entspricht;
   - der Übergangskanal (22) weist an einer dem Strömuhgskanal zugewandten Seite einen zweiten Querschnitt auf, der dem Querschnitt des Strömungskanals entspricht; und
   - das Übergangsstück (20) ist mit dem Klappengehäuse (2) form- und/oder stoffschlüssig verbunden.

6. Absperrvorrichtung (1) nach einem der Ansprüche 4 oder 5, **dadurch gekennzeichnet, dass** das Übergangsstück (20) in seiner Axialausdehnung unveränderlich und somit starr ist.

7. Absperrvorrichtung (1) nach einem der Ansprüche 4 oder 5, **dadurch gekennzeichnet, dass** das Übergangsstück (20) in seiner Axialausdehnung veränderlich und somit flexibel ist.

8. Absperrvorrichtung (1) nach einem der Ansprüche 4 bis 7, **dadurch gekennzeichnet, dass** das Übergangsstück (20) aus einem flächigen Material gebildet ist, wobei das flächige Material eine derartige Form aufweist, dass durch Verbinden von zwei Abschlusskanten des flächigen Materials das Übergangsstück (20) gebildet wird.

9. Absperrvorrichtung (1) nach einem der Ansprüche 4 bis 8, **gekennzeichnet durch** die folgenden Merkmale:

   - das Übergangsstück (20) umfasst einen ersten Anschlussflansch (24) und einen zweiten Anschlussflansch (26) ;
   - der erste Anschlussflansch (24) und der zweite Anschlussflansch (26) umfassen jeweils ein Flanschprofil (27); und
   - das Flanschprofil (27) umfasst einen Montageschenkel (27a) und eine Montagenut (27b), in die eine Halteleiste (27d) hineinragt.

10. Absperrvorrichtung (1) nach einem der vorangehenden Ansprüche, **gekennzeichnet durch** die folgenden Merkmale:

    - die Absperrvorrichtung umfasst eine mit einem Ausdehnungsmedium gefüllte Bourdonfeder (30);
    - die Bourdonfeder (30) ist mit dem Klappengehäuse (2) verbunden und mit der Absperrklappe (10) bewegungsgekoppelt;
    - bei Überschreiten einer vorgegebenen Temperatur des Ausdehnungsmediums vergrößert sich das Volumen des Ausdehnungsmediums derart, dass die Bourdonfeder (30) ein die Absperrklappe (10) in Schließstellung überführendes Drehmoment entwickelt; und
    - bei Unterschreiten der vorgegebenen Temperatur des Ausdehnungsmediums verkleinert sich das Volumen des Ausdehnungsmediums derart, dass die Bourdonfeder (30) ein die Absperrklappe (10) in Offenstellung überführendes Drehmoment entwickelt.

11. Absperrvorrichtung (1) nach einem der vorangehenden Ansprüche, **dadurch gekennzeichnet, dass** die Absperrvorrichtung (1) eine mit der Absperrklappe (10) bewegungsgekoppelte Antriebseinrichtung (40) umfasst, mittels der die Absperrklappe (10) motorisch zwischen der Offenstellung und der Schließstellung verschwenkbar ist.

12. Absperrvorrichtung (1) nach einem der vorangehenden Ansprüche, **dadurch gekennzeichnet, dass** die Absperrvorrichtung (1) einen mit der Absperrklappe (10) bewegungsgekoppelten Bedienhebel (57) umfasst, mittels dem die Absperrklappe (10) manuell zwischen der Offenstellung und der Schließstellung verschwenkbar ist.

13. Absperrvorrichtung (1) nach einem der vorangehenden Ansprüche, **gekennzeichnet durch** die folgenden Merkmale:

    - die Absperrvorrichtung (1) umfasst eine Vorspanneinrichtung (54), die die Absperrklappe (10) auf die Schließstellung zu vorspannt;
    - die Absperrvorrichtung (1) umfasst eine Halteeinrichtung (53), die die Absperrklappe (10) in der Offenstellung hält; und
    - bei Überschreiten einer vorgegebenen Temperatur innerhalb der Absperrvorrichtung (1) gibt die Halteeinrichtung (53) die Absperrklappe (10) frei, so dass die Absperrklappe (10) mittels der Vorspanneinrichtung (54) in die Schließstellung verschwenkt wird.

14. Absperrvorrichtung (1) nach einem der vorangehenden Ansprüche, **gekennzeichnet durch** die folgenden Merkmale:

    - an einer Innenwandung des Klappengehäuses (2) sind zwei umlaufende Sicken vorgesehen;
    - die Dichtung (12) umfasst zwei Dichtungssegmente (12a, 12b); und
    - in Schließstellung der Absperrklappe (10) liegen die Dichtungssegmente (12a, 12b) formschlüssig an den Sicken des Klappengehäuses (2) an.

15. Absperrvorrichtung (1) nach einem der vorangehenden Ansprüche, **dadurch gekennzeichnet, dass** an einer Innenwandung des Klappengehäuses (2) ein umlaufendes Band angeordnet ist, das in Schließstellung der Absperrklappe (10) mit der Dichtung (12) in Kontakt steht und bei Überschreiten einer vorgegebenen Temperatur aufschäumt.

16. Absperrvorrichtung (1) nach einem der vorhergehenden Ansprüche, **gekennzeichnet durch** die folgenden Merkmale:

    - das Klappengehäuse (2) weist eine an dessen Innenseite und in den Klappengehäusekanal (4) ragende, umlaufende Radialverdickung (2') auf; und
    - die Dichtung (12) steht mit der Radialverdickung (2') in Schließstellung der Absperrklappe (10) in Kontakt.

# Claims

1. Shut-off device (1) for closing a flow duct for air and/or gaseous media, the shut-off device (1) having the following features:

   - the shut-off device (1) comprises a valve housing (2) having a valve housing duct (4);
   - the shut-off device (1) comprises a shut-off valve (10) which is pivotally mounted on a pivot axis (14) in the valve housing duct (4),
   - a seal (12) is arranged along the circumference of the shut-off valve (10);
   - the shut-off valve (10) can be pivoted between an open position and a closed position;
   - a flow can pass through the valve housing duct (4) in the open position of the shut-off valve (10);
   - in the closed position of the shut-off valve (10), said valve closes the valve housing duct (4) so that a flow cannot pass through the valve housing duct (4); and
   - the valve housing duct (4) and the shut-off valve (10) each have elliptical cross sections,

   **characterised in that** the cross-sectional shape of the shut-off valve (10) is superelliptical and, in the Cartesian coordinate system, corresponds to the ellipse equation

   $$\left| \frac{x}{a} \right|^n + \left| \frac{y}{b} \right|^n = 1$$

   a and b being the semi-axes of the ellipse, x being the x-coordinate, y being the y-coordinate and n being a real number in the range $10 \geq n > 2$.

2. Shut-off device according to any of the preceding claims, **characterised in that** the elliptical shape of the cross section of the shut-off valve (10) is approximated by a polygon.

3. Shut-off device (1) according to any of the preceding claims, **characterised in that** the cross-sectional area of the valve housing duct (4) corresponds to the cross-sectional area of the flow duct.

4. Shut-off device (1) according to any of the preceding claims, **characterised by** the following features:

   - the shut-off device (1) further comprises at least one transition piece (20) which is connected to the valve housing (2) and has a transition duct (22);
   - the transition duct (22) has a first cross section, on the side thereof facing the valve housing (2), which corresponds to the cross section of the valve housing duct (4);
   - the transition duct (22) has a second cross section, on the side thereof facing the flow duct, which corresponds to the cross section of the flow duct; and
   - the transition piece (20) can be connected to the flow duct in such a manner that the transition duct (22) forms a flow duct portion.

5. Shut-off device (1) according to any of claims 1 to 3, **characterised by** the following features:

   - the shut-off device (1) further comprises at least one transition piece (20) which can be connected to the valve housing (2) and has a transition duct (22);
   - the transition duct (22) has a first cross section, on the side thereof facing the valve housing (2), which corresponds to the cross section of the valve housing duct (4);
   - the transition duct (22) has a second cross section, on the side thereof facing the flow duct, which corresponds to the cross section of the flow duct; and
   - the transition piece (20) can be connected to the valve housing (2) in an interlocking and/or integrally bonded manner.

6. Shut-off device (1) according to either claim 4 or claim 5, **characterised in that** the axial extension of the transition piece (20) cannot be changed, and said piece is thus rigid.

7. Shut-off device (1) according to either claim 4 or claim 5, **characterised in that** the axial extension of the transition piece (20) can be changed, and said piece is thus flexible.

8. Shut-off device (1) according to any of claims 4 to 7, **characterised in that** the transition piece (20) is made of a planar material, the planar material having such a shape that the transition piece (20) is formed by connecting two end edges of the planar material.

9. Shut-off device (1) according to any of claims 4 to 8, **characterised by** the following features:

   - the transition piece (20) comprises a first connecting flange (24) and a second connecting flange (26);
   - the first connecting flange (24) and the second connecting flange (26) each have a flange profile (27); and
   - the flange profile (27) has an assembly leg (27a) and an assembly groove (27b) into which a retaining strip protrudes (27d).

10. Shut-off device (1) according to any of the preceding claims, **characterised by** the following features:

- the shut-off device comprises a Bourdon tube (30) which is filled with an expansion medium;
- the Bourdon tube (30) is connected to the valve housing (2) and coupled for movement to the shut-off valve (10);
- when the expansion medium exceeds a predetermined temperature, the volume of the expansion medium increases such that the Bourdon tube (30) generates a torque which transfers the shut-off valve (10) into the closed position; and
- when the expansion medium falls below the predetermined temperature, the volume of the expansion medium decreases such that the Bourdon tube (30) generates a torque which transfers the shut-off valve (10) into the open position.

11. Shut-off device (1) according to any of the preceding claims, **characterised in that** the shut-off device (1) comprises a drive means (40) which is coupled for movement to the shut-off valve (10) and by means of which the shut-off valve (10) can be pivoted in a motor-driven manner between the open position and the closed position.

12. Shut-off device (1) according to any of the preceding claims, **characterised in that** the shut-off device (1) comprises a control lever (57) which is coupled for movement to the shut-off valve (10) and by means of which lever the shut-off valve (10) can be pivoted manually between the open position and the closed position.

13. Shut-off device (1) according to any of the preceding claims, **characterised by** the following features:

- the shut-off device (1) comprises a biasing means (54) which biases the shut-off valve (10) towards the closed position;
- the shut-off device (1) comprises a retaining means (53) which holds the shut-off valve (10) in the open position; and
- when a predetermined temperature is exceeded inside the shut-off device (1), the retaining means (53) releases the shut-off valve (10) so that the shut-off valve (10) is pivoted into the closed position by the biasing means (54).

14. Shut-off device (1) according to any of the preceding claims, **characterised by** the following features:

- two circumferential beads are provided on an inner wall of the valve housing (2);
- the seal (12) comprises two sealing segments (12a, 12b); and

- in the closed position of the shut-off valve (10), the sealing segments (12a, 12b) lie against the beads of the valve housing (2) in an interlocking manner.

15. Shut-off device (1) according to any of the preceding claims, **characterised in that** a circumferential strip is arranged on an inner wall of the valve housing (2), which strip is in contact with the seal (12) in the closed position of the shut-off valve (10) and expands when a predetermined temperature is exceeded.

16. Shut-off device (1) according to any of the preceding claims, **characterised by** the following features:

- the valve housing (2) comprises a circumferential radial thickening (2') on the inside thereof, which thickening protrudes into the valve housing duct (4); and
- the seal (12) is in contact with the radial thickening (2') in the closed position of the shut-off valve (10).

**Revendications**

1. Dispositif de fermeture (1) pour obturer un canal d'écoulement pour de l'air et/ou des milieux de forme gazeuse, dans lequel le dispositif de fermeture (1) comprend les éléments suivants :

- le dispositif de fermeture (1) inclut un boîtier de clapet (2) avec un canal de boîtier (4) ;
- le dispositif de fermeture (1) inclut un clapet de fermeture (10) qui est monté en pivotement sur un axe de pivotement (14) dans le canal de boîtier (4) ;
- un joint (12) est agencé le long de la périphérie du clapet de fermeture (10) ;
- le clapet de fermeture (10) est capable de pivoter entre une position ouverte et une position fermée ;
- dans la position ouverte du clapet de fermeture (10) le canal de boîtier (4) laisse passer un écoulement ;
- dans la position fermée du clapet de fermeture (10), celui-ci obture le canal de boîtier (4), de sorte que le canal de boîtier (4) ne peut pas laisser passer un écoulement ; et
- le canal de boîtier (4) et le clapet de fermeture (10) présentent chacun une section elliptique,

**caractérisé en ce que** la forme de section du clapet de fermeture (10) est super-elliptique et correspond, dans le système de coordonnées cartésiennes, à l'équation

$$|x/a|^n + |y/b|^n = 1,$$

dans laquelle

a et b sont les demi-axes de l'ellipse, x est la coordonnée suivant l'axe X, y est la coordonnée suivant l'axe Y, et n est un nombre réel dans la plage telle que $10 \geq n > 2$.

2. Dispositif de fermeture selon l'une des revendications précédentes, **caractérisé en ce que** la forme elliptique de la section du clapet de fermeture (10) est obtenue par approximation au moyen d'un polygone.

3. Dispositif de fermeture (1) selon l'une des revendications précédentes, **caractérisé en ce que** la surface de section transversale du canal de boîtier (4) correspond à la surface de section transversale du canal d'écoulement.

4. Dispositif de fermeture (1) selon l'une des revendications précédentes, **caractérisé par** les caractéristiques suivantes :

   - le dispositif de fermeture (1) comprend en outre au moins une pièce de transition (20), reliée au boîtier de clapet (2), avec un canal de transition (22) ;
   - le canal de transition (22) présente, sur un côté tourné vers le boîtier de clapet (2), une première section transversale qui correspond à la section transversale du canal de boîtier (4) ;
   - le canal de transition (22) présente, sur un côté tourné vers le canal d'écoulement, une seconde section transversale qui correspond à la section transversale du canal d'écoulement ; et
   - la pièce de transition (20) est susceptible d'être reliée au canal d'écoulement de telle manière que le canal de transition (22) forme une portion du canal d'écoulement.

5. Dispositif de fermeture (1) selon l'une des revendications 1 à 3, **caractérisé par** les caractéristiques suivantes :

   - le dispositif de fermeture (1) comprend en outre au moins une pièce de transition (20), reliée au boîtier de clapet (2), avec un canal de transition (22) ;
   - le canal de transition (22) présente, sur un côté tourné vers le boîtier de clapet (2), une première section transversale qui correspond à la section transversale du canal de boîtier (4) ;
   - le canal de transition (22) présente, sur un côté tourné vers le canal d'écoulement, une seconde section transversale qui correspond à la section transversale du canal d'écoulement ; et
   - la pièce de transition (20) est reliée par coopération de formes et/ou par coopération de matières avec le boîtier de clapet (2).

6. Dispositif de fermeture (1) selon l'une des revendications 4 ou 5, **caractérisé en ce que** la pièce de transition (20) est invariable quant à son extension axiale et par conséquent rigide.

7. Dispositif de fermeture (1) selon l'une des revendications 4 ou 5, **caractérisé en ce que** la pièce de transition (20) est variable quant à son extension axiale et par conséquent flexible.

8. Dispositif de fermeture (1) selon l'une des revendications 4 à 7, **caractérisé en ce que** la pièce de transition (20) est formée en un matériau surfacique, ledit matériau surfacique ayant une forme telle que la pièce de transition (20) est formée en reliant deux arêtes terminales du matériau surfacique.

9. Dispositif de fermeture (1) selon l'une des revendications 4 à 8, **caractérisé par** les caractéristiques suivantes :

   - la pièce de transition (20) comprend une première bride de liaison (24) et une seconde bride de liaison (26) ;
   - la première bride de liaison (24) et la seconde bride de liaison (26) comprennent chacune un profil de bride (27) ; et
   - le profil de bride (27) comprend une branche de montage (27a) et une gorge de montage (27b) dans laquelle pénètre une réglette de maintien (27d).

10. Dispositif de fermeture (1) selon l'une des revendications précédentes, **caractérisé par** les caractéristiques suivantes :

   - le dispositif de fermeture comprend un ressort de bourdon (30) rempli d'un milieu de dilatation ;
   - le ressort de bourdon (30) est relié au boîtier de clapet (2) et couplé au clapet de fermeture (30) en termes de déplacement ;
   - lors d'un dépassement d'une température prédéterminée du milieu de dilatation, le volume du milieu de dilatation augmente de telle façon que le ressort de bourdon (30) développe un couple de rotation qui fait passer le clapet de fermeture (10) dans la position fermée ; et
   - lors du passage au-dessous de la température prédéterminée du milieu de dilatation, le volume du milieu de dilatation diminue de façon telle que le ressort de bourdon (30) développe un couple de rotation qui fait passer le clapet de fermeture (10) dans la position ouverte.

**11.** Dispositif de fermeture (1) selon l'une des revendications précédentes, **caractérisé en ce que** le dispositif de fermeture (1) comprend un moyen d'entraînement (40) couplé avec le clapet de fermeture (10) en termes de déplacement, au moyen duquel le clapet de fermeture (10) est capable de pivoter de façon motorisée entre la position ouverte et la position fermée.

**12.** Dispositif de fermeture (1) selon l'une des revendications précédentes, **caractérisé en ce que** le dispositif de fermeture (1) comprend un levier de maniement (57) couplé avec le clapet de fermeture (10) en termes de déplacement, au moyen duquel le clapet de fermeture (10) est capable de pivoter manuellement entre la position ouverte et la position fermée.

**13.** Dispositif de fermeture (1) selon l'une des revendications précédentes, **caractérisé par** les caractéristiques suivantes :

    - le dispositif de fermeture (1) comprend un dispositif de précontrainte (56) qui précontraint le clapet de fermeture (10) vers la position fermée,
    - le dispositif de fermeture (1) inclut un moyen de maintien (53) qui maintient le clapet de fermeture (10) dans la position ouverte ; et
    - lors d'un dépassement d'une température prédéterminée à l'intérieur du dispositif de fermeture (1), le moyen de maintien (53) libère le clapet de fermeture (10) de telle sorte que le clapet de fermeture est pivoté au moyen du dispositif de précontrainte (54) vers la position fermée.

**14.** Dispositif de fermeture (1) selon l'une des revendications précédentes, **caractérisé par** les caractéristiques suivantes :

    - de moulures périphérique sont prévues sur une paroi intérieure du boîtier de clapet (2) ;
    - le joint (12) comprend deux segments d'étanchement (12a, 12b) ; et
    - dans la position fermée du clapet de fermeture (10), les segments d'étanchement (12a, 12b) sont appliqués par coopération de formes contre les moulures du boîtier de clapet (2).

**15.** Dispositif de fermeture (1) selon l'une des revendications précédentes, **caractérisé en ce qu'**une bordure périphérique est agencée sur une paroi intérieure du boîtier de clapet (2), ladite bordure étant en contact avec le joint (12) dans la position fermée du clapet de fermeture (10) et en cas de dépassement d'une température imposée, la bordure se met à mousser.

**16.** Dispositif de fermeture (1) selon l'une des revendications précédentes, **caractérisé par** les caractéristiques suivantes :

    - le boîtier de clapet (2) comporte un épaississement radial périphérique (2'), qui pénètre sur son côté intérieur et dans le canal de boîtier de clapet (4) ; et
    - le joint (12') est en contact avec l'épaississement radial (2') dans la position fermée du clapet de fermeture (0).

**Fig. 1**

EP 2 642 167 B1

Fig. 2b

Fig. 2a

Fig. 3

Fig. 4a

Fig. 4b

Fig. 5

EP 2 642 167 B1

Fig. 6

Fig. 7b

Fig. 7c

Fig. 7a

Fig. 8a

Fig. 8b

Fig. 9

Fig.10

Fig. 11

EP 2 642 167 B1

Fig. 12

Fig. 13

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1302220 A1
- DE 202008014234 U1
- DE 4409088 A1
- DE 4140870 A1